# EUROPEAN PATENT SPECIFICATION

(11) **EP 4 234 234 B1**
(45) Date of publication and mention of the grant of the patent: **31.07.2024**
(21) Application number: 23180603.5
(22) Date of filing: 23.01.2020
(51) Int. Cl.: B32B 27/40, H01G 11/78, B32B 15/12, B32B 27/26

(54) **POWER STORAGE DEVICE PACKAGING MATERIAL, METHOD FOR PRODUCING POWER STORAGE DEVICE PACKAGING MATERIAL, AND POWER STORAGE DEVICE**
VERPACKUNGSMATERIAL FÜR EINE ENERGIESPEICHEREINRICHTUNG, VERFAHREN ZUR HERSTELLUNG EINES VERPACKUNGSMATERIALS FÜR EINE ENERGIESPEICHEREINRICHTUNG UND ENERGIESPEICHEREINRICHTUNG
MATÉRIAU D'EMBALLAGE POUR DISPOSITIF DE STOCKAGE D'ÉNERGIE, MÉTHODE DE PRODUCTION DU MATÉRIAU D'EMBALLAGE POUR DISPOSITIF DE STOCKAGE D'ÉNERGIE, ET DISPOSITIF DE STOCKAGE D'ÉNERGIE

(30) Priority: 23.01.2019 JP 2019009816
(43) Date of publication of application: 30.08.2023
(62) Divisional of application: 20744745.9
(73) Proprietor: DAI NIPPON PRINTING CO., LTD., Tokyo 162-8001 (JP)
(72) Inventor: MITSUZUKA, Satoshi, Tokyo, 1628001 (JP); FUJIWARA, Ryo, Tokyo, 1628001 (JP)
(74) Representative: Müller-Boré & Partner Patentanwälte PartG mbB

(56) References cited:
- US-A1- 2018 076 423
- US-A1- 2018 312 943

## Description

### Technical Field

The present disclosure relates to a power storage device packaging material, a method for producing the power storage device packaging material, and a power storage device.

### Background Art

Various types of power storage devices have been heretofore developed. In these power storage devices, power storage device elements each including electrodes, an electrolyte, and the like need to be sealed with a packaging material, for example. Metallic packaging materials are widely used as power storage device packaging materials.

In recent years, along with the improved performance of electric cars, hybrid electric cars, personal computers, cameras, mobile phones, and the like, power storage devices having a variety of shapes have been required. Power storage devices have also been required to be reduced in thickness and weight. However, metallic packaging materials that have been heretofore widely used have difficulty in conforming to the diversified shapes of power storage devices. Moreover, because these packaging materials are made of metal, they are limited in terms of weight reduction.

Thus, a film-shaped laminate in which a base material layer/barrier layer/heat-sealable resin layer are laminated in this order has been proposed as a power storage device packaging material that can be readily processed into various shapes, and can achieve a reduction in thickness and weight (see, for example, Patent Literature 1). Patent Literature 2 gives an example of a power storage device packaging material comprising a laminate having a base material layer, an adhesive layer, a barrier layer, a second adhesive layer, and a heat-sealable resin layer, wherein the adhesive layers are a cured product of a resin composition containing a compound having an isocyanate group, a corrosion-resistant film is provided on a surface of the barrier layer, containing chromium fluoride and phosphoric acid.

In such a film-shaped power storage device packaging material, typically, a concave portion is formed by molding, a power storage device element including electrodes and an electrolytic solution is disposed in the space formed by the concave portion, and the heat-sealable resin layer is heat-sealed with itself. As a result, a power storage device in which the power storage device element is housed in the power storage device packaging material is obtained.

### Citation List

### Patent Literature

Patent Literature 1: JP 2008-287971 A
Patent Literature 2 : US 2018/076423 A1

### Summary of Invention

### Technical Problem

During the production of a power storage device, water may enter through the heat-sealed region of the heat-sealable resin layer in the packaging material for the power storage device. When water enters into the power storage device, it may react with the electrolyte or the like to produce an acidic substance. For example, an electrolytic solution used in a lithium ion storage device contains a fluorine compound (such as LiPF₆ or LiBF₄) as the electrolyte. It is known that when the fluorine compound reacts with water, it produces hydrogen fluoride.

The barrier layer of the power storage device packaging material formed of the film-shaped laminate is usually formed of a metal foil or the like, and has the drawback of being easily corroded when contacted with an acid. A known technique to improve the corrosion resistance of this power storage device packaging material is to use a barrier layer having a corrosion-resistant film formed on a surface by a chemical conversion treatment.

Various methods are known as the chemical conversion treatment for forming the corrosion-resistant film, including a chromate treatment using a chromium compound, such as chromium oxide, and a phosphoric acid treatment using a phosphoric acid compound.

However, research repeated by the inventors of the present disclosure has revealed that when a conventional barrier layer having a corrosion-resistant film is laminated to a heat-sealable resin layer with an adhesive layer therebetween, if an electrolytic solution adheres to the power storage device packaging material, the high adhesion between the corrosion-resistant film of the barrier layer and the adhesive layer (i.e., adhesion at the interface between the corrosion-resistant film and the adhesive layer) cannot be maintained. In particular, when water enters into the power storage device, and the electrolytic solution contains water, hydrogen fluoride is produced, which corrodes the barrier layer. This makes it difficult to maintain the high adhesion between the barrier layer having the corrosion-resistant film and the adhesive layer.

Under such circumstances, it is a main object of the present disclosure to provide a power storage device packaging material that maintains high adhesion between a barrier layer having a corrosion-resistant film and an adhesive layer, even when water enters into the power storage device. It is also an object of the present disclosure to provide a method for producing the power storage device packaging material and a power storage device obtained using the power storage device packaging material.

### Solution to Problem

The inventors of the present disclosure conducted extensive research to solve the aforementioned problem. As a result, the inventors have found that, in a power storage device packaging material that is a laminate comprising at least a base material layer, a barrier layer, an adhesive layer, and a heat-sealable resin layer in this order, and in which a corrosion-resistant film is provided on at least a surface of the barrier layer facing the adhesive layer, when a specific curing agent is used to form the adhesive layer, and a specific corrosion-resistant film is used as the corrosion-resistant film, high adhesion between the barrier layer having the corrosion-resistant film and the adhesive layer is maintained even when water enters into the power storage device.

The invention of the present disclosure has been completed as a result of further research based on these findings. The invention is as defined in the independent claims and the various embodiments are defined as in the dependent claims.

In summary, the present disclosure provides an embodiment of the invention as set forth below:
A power storage device packaging material comprising:
   a laminate comprising at least a base material layer, a barrier layer, an adhesive layer, and a heat-sealable resin layer in this order, wherein
   the adhesive layer is a cured product of a resin composition containing a compound having an isocyanate group,
   a corrosion-resistant film is provided on at least a surface of the barrier layer facing the adhesive layer,
   when the corrosion-resistant film is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is in the range of 6 or more and 120 or less,
   when the corrosion-resistant film is analyzed by X-ray photoelectron spectroscopy, a peak P_{OCO} derived from C1s of O-C=O bonds in the range of 287 eV to 290 eV and a peak P_{C-C} derived from C1s of C-C bonds at 285 eV are detected, and
   a value of peak height ratio P_{OCO/C-C} obtained by dividing a height of the peak P_{OCO} by a height of the peak P_{C-C} is in the range of 0.10 or more and 0.50 or less.

### Advantageous Effects of Invention

The present disclosure can provide a power storage device packaging material that maintains high adhesion between a barrier layer having a corrosion-resistant film and an adhesive layer, even when water enters into the power storage device. The present disclosure can also provide a method for producing the power storage device packaging material and a power storage device obtained using the power storage device packaging material.

### Brief Description of Drawings

FIG. 1 is a schematic diagram showing one exemplary cross-sectional structure of a power storage device packaging material of the present disclosure.
FIG. 2 is a schematic diagram showing one exemplary cross-sectional structure of a power storage device packaging material of the present disclosure.
FIG. 3 is a schematic diagram showing one exemplary cross-sectional structure of a power storage device packaging material of the present disclosure.
FIG. 4 is a schematic diagram showing one exemplary cross-sectional structure of a power storage device packaging material of the present disclosure.

### Description of Embodiments

A power storage device packaging material of the present disclosure comprises a laminate comprising at least a base material layer, a barrier layer, an adhesive layer, and a heat-sealable resin layer in this order, wherein the adhesive layer is a cured product of a resin composition containing a compound having an isocyanate group; a corrosion-resistant film is provided on at least a surface of the barrier layer facing the adhesive layer; when the corrosion-resistant film is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is in the range of 6 or more and 120 or less; when the corrosion-resistant film is analyzed by X-ray photoelectron spectroscopy, a peak P_{OCO} derived from C1s of O-C=O bonds in the range of 287 eV to 290 eV and a peak P_{C-C} derived from C1s of C-C bonds at 285 eV are detected; and a value of peak height ratio P_{OCO/C-C} obtained by dividing a height of the peak P_{OCO} by a height of the peak P_{C-C} is in the range of 0.10 or more and 0.50 or less.

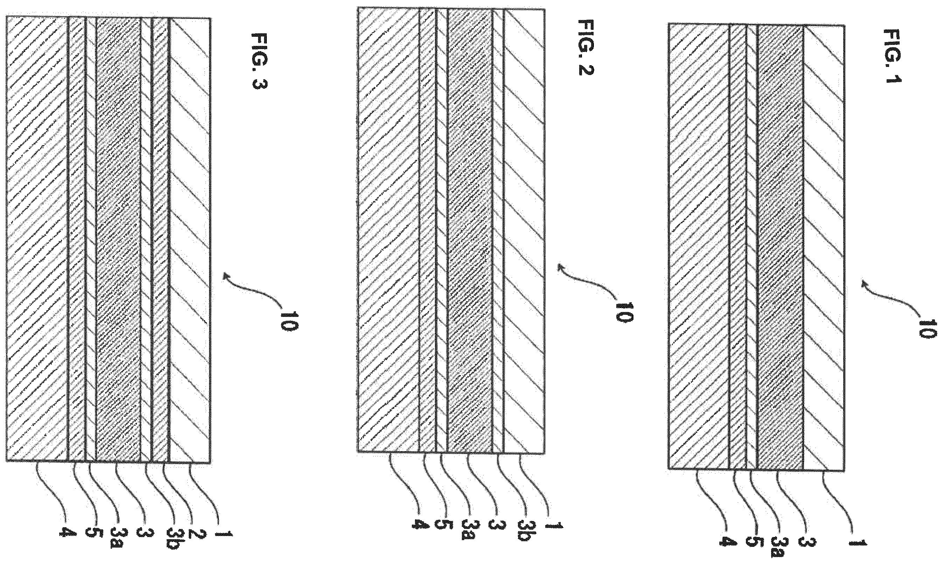

Referring to FIGS. 1 to 4, a power storage device packaging material of the present disclosure, a method for producing the power storage device packaging material, and a power storage device obtained using the power storage device packaging material will be described in detail.

As used herein, any numerical range indicated by "... to ..." means "... or more" and "... or less". For example, the recitation "2 to 15 mm" means 2 mm or more and 15 mm or less.

### 1. Laminated Structure of Power Storage Device Packaging Material

As shown in FIGS. 1, to 4, for example, a power storage device packaging material of the present disclosure is formed of a laminate having at least a base material layer 1, a barrier layer 3, an adhesive layer 5, and a heat-sealable resin layer 4 in this order. In the power storage device packaging material of the present disclosure, the base material layer 1 is an outermost layer, and the heat-sealable resin layer 4 is an innermost layer. That is, during the assembly of a power storage device, the heat-sealable resin layer 4 positioned on the periphery of a power storage device element is heat-sealed with itself to hermetically seal the power storage device element, such that the power storage device element is encapsulated.

A corrosion-resistant film is provided on at least one surface of the barrier layer 3. The corrosion-resistant film contains chromium. FIG. 1 shows a schematic diagram of a case where the power storage device packaging material of the present disclosure comprises a corrosion-resistant film 3a on a surface of the barrier layer 3 facing the heat-sealable resin layer 4. FIGS. 2 to 4 each show a schematic diagram of a case where the power storage device packaging material of the present disclosure comprises corrosion-resistant films 3a and 3b on both surfaces of the barrier layer 3. As described below, the power storage device packaging material of the present disclosure may comprise the corrosion-resistant film 3a on only the surface of the barrier layer 3 facing the heat-sealable resin layer 4, or may comprise the corrosion-resistant films 3a and 3b on both surfaces of the barrier layer 3.

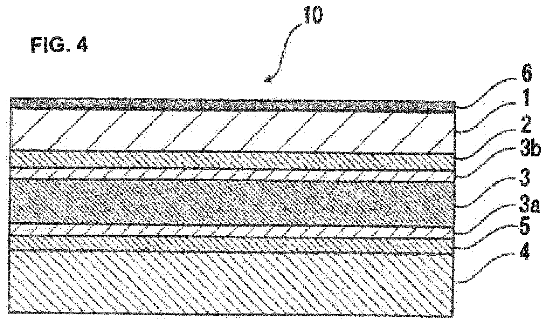

As shown in FIGS. 3 and 4, the power storage device packaging material of the present disclosure may optionally comprise an adhesive agent layer 2 between the base material layer 1 and the barrier layer 3, for the purpose of improving the adhesiveness between these layers. Moreover, as shown in FIG. 4, the power storage device packaging material of the present disclosure may also optionally comprise a surface coating layer 6 on a surface of the base material layer 1 opposite to the barrier layer 3, for the purpose of enhancing the designability, electrolytic solution resistance, scratch resistance, and moldability, for example.

The thickness of the laminate that forms the power storage device packaging material 10 is not limited; for example, the upper limit is preferably about 180 µm or less, about 155 µm or less, or about 120 µm or less, from the viewpoint of reducing costs, improving the energy density, and the like, while the lower limit is preferably about 35 µm or more, about 45 µm or more, or about 60 µm or more, from the viewpoint of maintaining the function of the power storage device packaging material to protect the power storage device element. Preferred ranges include from about 35 to 180 µm, from about 35 to 155 µm, from about 35 to 120 µm, from about 45 to 180 µm, from about 45 to 155 µm, from about 45 to 120 µm, from about 60 to 180 µm, from about 60 to 155 µm, and from about 60 to 120 µm.

In the power storage device packaging material, MD and TD in the production process are usually distinguishable in the below-described barrier layer 3. For example, when the barrier layer 3 is formed of an aluminum alloy foil, linear streaks, which are so-called rolling marks, are formed on the surface of the aluminum alloy foil in the rolling direction (RD) of the aluminum alloy foil. Because the rolling marks extend along the rolling direction, the rolling direction of the aluminum alloy foil can be grasped by observing the surface of the alloy aluminum foil. Moreover, because MD of the laminate usually corresponds to RD of the aluminum alloy foil in the production process of the laminate, MD of the laminate can be identified by observing the surface of the alloy aluminum foil of the laminate, and identifying the rolling direction (RD) of the aluminum alloy foil. Furthermore, because TD of the laminate is perpendicular to MD of the laminate, TD of the laminate can also be identified.

### 2. Layers That Form Power Storage Device Packaging Material

### [Base Material Layer 1]

In the present disclosure, the base material layer 1 is a layer that is provided for the purpose of, for example, functioning as a base material of the power storage device packaging material. The base material layer 1 is positioned as an outermost layer of the power storage device packaging material.

The material that forms the base material layer 1 is not limited as long as it has the function as a base material, i.e., at least insulation properties. The base material layer 1 may be formed using a resin, for example, and the resin may contain the below-described additives.

When the base material layer 1 is formed of a resin, the base material layer 1 may be a resin film formed of the resin, or may be formed by applying the resin, for example. The resin film may be a stretched film or an unstretched film. The stretched film may be, for example, a uniaxially stretched film or a biaxially stretched film, and is preferably a biaxially stretched film. Examples of stretching methods for forming the biaxially stretched film include a sequential biaxial stretching method, an inflation method, and a simultaneous biaxial stretching method. Examples of methods of applying the resin include a roll coating method, a gravure coating method, and an extrusion coating method.

Examples of resins that form the base material layer 1 include resins such as polyesters, polyamides, polyolefins, epoxy resins, acrylic resins, fluororesins, polyurethanes, silicone resins, phenol resins, and the like, as well as modified resins thereof. The resin that forms the base material layer 1 may also be a copolymer of these resins or a modified copolymer thereof. The resin that forms the base material layer 1 may also be a mixture of these resins.

Among the above, polyesters and polyamides, for example, are preferred as the resin that forms the base material layer 1.

Specific examples of polyesters include polyethylene terephthalate, polybutylene terephthalate, polyethylene naphthalate, polybutylene naphthalate, polyethylene isophthalate, and copolyesters. Examples of copolyesters include copolyesters containing ethylene terephthalate as a main repeating unit. Specific examples of these copolyesters include copolyesters obtained by polymerizing ethylene terephthalate as a main repeating unit with ethylene isophthalate (abbreviated as polyethylene (terephthalate/isophthalate); hereinafter similarly abbreviated), polyethylene (terephthalate/adipate), polyethylene (terephthalate/sodium sulfoisophthalate), polyethylene (terephthalate/sodium isophthalate), polyethylene (terephthalate/phenyl-dicarboxylate), and polyethylene (terephthalate/decane dicarboxylate). These polyesters may be used alone or in combination.

Specific examples of polyamides include aliphatic polyamides, such as nylon 6, nylon 66, nylon 610, nylon 12, nylon 46, and copolymers of nylon 6 and nylon 66; polyamides containing aromatics, such as hexamethylenediamine-isophthalic acid-terephthalic acid copolyamides containing structural units derived from terephthalic acid and/or isophthalic acid, for example, nylon 6I, nylon 6T, nylon 6IT, and nylon 6I6T (I denotes isophthalic acid, and T denotes terephthalic acid), and polyamide MXD6 (polymethaxylylene adipamide); cycloaliphatic polyamides, such as polyamide PACM6 (polybis(4-aminocyclohexyl)methane adipamide); polyamides copolymerized with a lactam component or an isocyanate component such as 4,4'-diphenylmethane-diisocyanate, and polyester amide copolymers or polyether ester amide copolymers that are copolymers of copolyamides with polyesters or polyalkylene ether glycols; and copolymers thereof. These polyamides may be used alone or in combination.

The base material layer 1 preferably contains at least one of a polyester film, a polyamide film, and a polyolefin film, more preferably contains at least one of a stretched polyester film, a stretched polyamide film, and a stretched polyolefin film, still more preferably contains at least one of a stretched polyethylene terephthalate film, a stretched polybutylene terephthalate film, a stretched nylon film, and a stretched polypropylene film, and even more preferably contains at least one of a biaxially stretched polyethylene terephthalate film, a biaxially stretched polybutylene terephthalate film, a biaxially stretched nylon film, and a biaxially stretched polypropylene film.

The base material layer 1 may be composed of a single layer or two or more layers. When the base material layer 1 is composed of two or more layers, it may be a laminate in which resin films are laminated with an adhesive or the like, or may be a laminate of two or more layers of resin films formed by co-extruding resins. The laminate of two or more layers of resin films formed by co-extruding resins may be used in an unstretched state as the base material layer 1, or may be uniaxially or biaxially stretched and used as the base material layer 1.

Specific examples of laminates of two or more layers of resin films for the base material layer 1 include a laminate of a polyester film and a nylon film, a laminate of two or more layers of nylon films, and a laminate of two or more layers of polyester films. Preferred are a laminate of a stretched nylon film and a stretched polyester film, a laminate of two or more layers of stretched nylon films, and a laminate of two or more layers of stretched polyester films. For example, when the base material layer 1 is a laminate of two or more layers of resin films, it is preferably a laminate of a polyester resin film and a polyester resin film, a laminate of a polyamide resin film and a polyamide resin film, or a laminate of a polyester resin film and a polyamide resin film, and is more preferably a laminate of a polyethylene terephthalate film and a polyethylene terephthalate film, a laminate of a nylon film and a nylon film, or a laminate of a polyethylene terephthalate film and a nylon film. When the base material layer 1 is a laminate of two or more layers of resin films, it is preferred that a polyester resin film be positioned as an outermost layer of the base material 1, because polyester resin is unlikely to discolor when, for example, the electrolytic solution adheres to the surface.

When the base material layer 1 is a laminate of two or more layers of resin films, the two or more layers of resin films may be laminated with an adhesive therebetween. Examples of preferred adhesives are the same adhesives as those mentioned for the adhesive agent layer 2 described below. The method of laminating two or more layers of resin films is not limited, and may be any of known methods, for example, a dry lamination method, a sandwich lamination method, an extrusion lamination method, and a thermal lamination method, preferably a dry lamination method. When the lamination is performed using a dry lamination method, a polyurethane adhesive is preferably used as an adhesive. In this case, the thickness of the adhesive is, for example, about 2 to 5 µm. An anchor coat layer may also be formed and laminated on the resin films. Examples of the anchor coat layer are the same adhesives as those mentioned for the adhesive agent layer 2 described below. In this case, the thickness of the anchor coat layer is, for example, about 0.01 to 1.0 µm.

At least one of the surface and the inside of the base material layer 1 may contain additives such as lubricants, flame retardants, anti-blocking agents, antioxidants, light stabilizers, tackifiers, and anti-static agents. A single additive may be used alone, or a mixture of two or more additives may be used.

In the present disclosure, it is preferred that a lubricant be present on the surface of the base material layer 1, from the viewpoint of enhancing the moldability of the power storage device packaging material. While the lubricant is not limited, it is preferably an amide-based lubricant. Specific examples of amide-based lubricants include saturated fatty acid amides, unsaturated fatty acid amides, substituted amides, methylol amides, saturated fatty acid bis-amides, unsaturated fatty acid bis-amides, fatty acid ester amides, and aromatic bis-amides. Specific examples of saturated fatty acid amides include lauramide, palmitamide, stearamide, behenamide, and hydroxystearamide. Specific examples of unsaturated fatty acid amides include oleamide and erucamide. Specific examples of substituted amides include N-oleyl palmitamide, N-stearyl stearamide, N-stearyl oleamide, N-oleyl stearamide, and N-stearyl erucamide. Specific examples of methylol amides include methylol stearamide. Specific examples of saturated fatty acid bis-amides include methylene-bis-stearamide, ethylene-bis-capramide, ethylene-bis-lauramide, ethylene-bis-stearamide, ethylene-bis-hydroxystearamide, ethylene-bis-behenamide, hexamethylene-bis-stearamide, hexamethylene-bis-behenamide, hexamethylene hydroxystearamide, N,N'-distearyl adipamide, and N,N'-distearyl sebacamide Specific examples of unsaturated fatty acid bis-amides include ethylene-bis-oleamide, ethylene-bis-erucamide, hexamethylene-bis-oleamide, N,N'-dioleyl adipamide, and N,N'-dioleyl sebacamide. Specific examples of fatty acid ester amides include stearamide ethyl stearate. Specific examples of aromatic bis-amides include m-xylylene-bis-stearamide, m-xylylene-bis-hydroxystearamide, and N,N'-distearyl isophthalamide. These lubricants may be used alone or in combination.

When a lubricant is present on the surface of the base material layer 1, the amount of the lubricant present is not limited, but is preferably about 3 mg/m² or more, more preferably about 4 to 15 mg/m², and still more preferably about 5 to 14 mg/m².

The lubricant present on the surface of the base material layer 1 may be exuded from the lubricant contained in the resin that forms the base material layer 1, or may be applied to the surface of the base material layer 1.

While the thickness of the base material layer 1 is not limited as long as the function as a base material is exhibited, it is, for example, about 3 to 50 µm, and preferably about 10 to 35 µm. When the base material layer 1 is a laminate of two or more layers of resin films, the thickness of the resin film that forms each layer is preferably about 2 to 25 µm.

### [Adhesive Agent Layer 2]

In the power storage device packaging material of the present disclosure, the adhesive agent layer 2 is a layer that is optionally provided between the base material layer 1 and the barrier layer 3, for the purpose of improving the adhesiveness between these layers.

The adhesive agent layer 2 is formed of an adhesive capable of bonding the base material layer 1 and the barrier layer 3. While the adhesive used for forming the adhesive agent layer 2 is not limited, it may be any of a chemical reaction type, a solvent volatilization type, a heat melting type, a heat pressing type, and the like. The adhesive may also be a two-liquid curable adhesive (two-liquid adhesive), a one-liquid curable adhesive (one-liquid adhesive), or a resin that does not involve a curing reaction. The adhesive agent layer 2 may be composed of a single layer or a plurality of layers.

Specific examples of adhesive components contained in the adhesive include polyesters, such as polyethylene terephthalate, polybutylene terephthalate, polyethylene naphthalate, polybutylene naphthalate, polyethylene isophthalate, and copolyesters; polyethers; polyurethanes; epoxy resins; phenol resins; polyamides, such as nylon 6, nylon 66, nylon 12, and copolyamides; polyolefin-based resins, such as polyolefins, cyclic polyolefins, acid-modified polyolefins, and acid-modified cyclic polyolefins; polyvinyl acetates; celluloses; (meth)acrylic resins; polyimides; polycarbonates; amino resins, such as urea resins and melamine resins; rubbers, such as chloroprene rubber, nitrile rubber, and styrene-butadiene rubber; and silicone resins. These adhesive components may be used alone or in combination. Preferred among these adhesive components is a polyurethane adhesive, for example. Moreover, the resin that serves as an adhesive component can be used in combination with an appropriate curing agent to improve the adhesive strength. The curing agent is selected from appropriate curing agents, such as a polyisocyanate, a polyfunctional epoxy resin, an oxazoline group-containing polymer, a polyamine resin, and an acid anhydride, depending on the functional group of the adhesive component.

The polyurethane adhesive may be, for example, a polyurethane adhesive containing a polyol compound as a base resin and a curing agent containing an isocyanate compound. The polyurethane adhesive is preferably a two-liquid curable polyurethane adhesive containing a polyol such as a polyester polyol, a polyether polyol, or an acrylic polyol as a base resin, and an aromatic or aliphatic polyisocyanate as a curing agent. The polyol compound is preferably a polyester polyol having a hydroxyl group at a side chain, in addition to the hydroxyl groups at the ends of the repeating unit. When the adhesive agent layer 2 is formed of a polyurethane adhesive, the power storage device packaging material is provided with excellent electrolytic solution resistance, which prevents the base material layer 1 from peeling off even if the electrolytic solution adheres to the side surface.

The adhesive agent layer 2 may be blended with other components as long as they do not interfere with adhesiveness, and may contain colorants, thermoplastic elastomers, tackifiers, fillers, and the like. When the adhesive agent layer 2 contains a colorant, the power storage device packaging material can be colored. The colorant may be a known colorant, such as a pigment or a dye. A single colorant may be used, or a mixture of two or more colorants may be used.

The pigment is not limited in type as long as it does not impair the adhesiveness of the adhesive agent layer 2. Examples of organic pigments include azo-based, phthalocyanine-based, quinacridone-based, anthraquinone-based, dioxazine-based, indigo/thioindigo-based, perinone-perylene-based, isoindolenine-based, and benzimidazolone-based pigments. Examples of inorganic pigments include carbon black-based, titanium oxide-based, cadmium-based, lead-based, chromium oxide-based, and iron-based pigments. Other examples include mica powder and fish scale flakes.

Among these colorants, carbon black is preferred, in order to make the external appearance of the power storage device packaging material black, for example.

The average particle diameter of the pigment is not limited, and may be, for example, about 0.05 to 5 µm, and preferably about 0.08 to 2 µm. The average particle diameter of the pigment is the median diameter measured using a laser diffraction/scattering particle size distribution analyzer.

The pigment content in the adhesive agent layer 2 is not limited as long as the power storage device packaging material is colored; for example, it is about 5 to 60% by mass, and preferably 10 to 40% by mass.

The thickness of the adhesive agent layer 2 is not limited as long as the base material layer 1 and the barrier layer 3 can be bonded; for example, the lower limit may be about 1 µm or more or about 2 µm or more, while the upper limit may be about 10 µm or less or about 5 µm or less. Preferred ranges include from about 1 to 10 µm, from about 1 to 5 µm, from about 2 to 10 µm, and from about 2 to 5 µm.

### [Coloring Layer]

A coloring layer (not illustrated) is a layer that is optionally provided between the base material layer 1 and the barrier layer 3. When the adhesive agent layer 2 is provided, the coloring layer may be provided between the base material layer 1 and the adhesive agent layer 2 or between the adhesive agent layer 2 and the barrier layer 3. Alternatively, the coloring layer may be provided on the outer side of the base material layer 1. The power storage device packaging material can be colored by providing the coloring layer.

The coloring layer can be formed, for example, by applying an ink containing a colorant to the surface of the base material layer 1, the surface of the adhesive agent layer 2, or the surface of the barrier layer 3. The colorant may be a known colorant, such as a pigment or a dye. A single colorant may be used, or a mixture of two or more colorants may be used.

Specific examples of the colorant contained in the coloring layer are the same as those mentioned in the [Adhesive Agent Layer 2] section.

### [Barrier Layer 3]

In the power storage device packaging material, the barrier layer 3 is a layer that at least inhibits the ingress of water.

The barrier layer 3 may be, for example, a metal foil, a vapor-deposited film, or a resin layer having barrier properties. Examples of the vapor-deposited film include a vapor-deposited metal film, a vapor-deposited inorganic oxide film, and a vapor-deposited carbon-containing inorganic oxide film. Examples of the resin layer include fluorine-containing resins, such as polyvinylidene chloride, polymers containing chlorotrifluoroethylene (CTFE) as a main component, polymers containing tetrafluoroethylene (TFE) as a main component, polymers having fluoroalkyl groups, and polymers having fluoroalkyl units as a main component; and ethylene-vinyl alcohol copolymers. The barrier layer 3 may also be, for example, a resin film having at least one of these vapor-deposited films and resin layers. Alternatively, a plurality of barrier layers 3 may be provided. The barrier layer 3 preferably includes a layer formed of a metal material. Specific examples of metal materials that form the barrier layer 3 include aluminum alloys, stainless steel, titanium steel, and steel sheets. When the barrier layer 3 is a metal foil, it preferably includes at least one of an aluminum alloy foil and a stainless steel foil.

The aluminum alloy foil is more preferably a soft aluminum alloy foil formed of an annealed aluminum alloy, for example, from the viewpoint of improving the moldability of the power storage device packaging material, and is more preferably an aluminum alloy foil containing iron, from the viewpoint of further improving the moldability. In the aluminum alloy foil (100% by mass) containing iron, the iron content is preferably 0.1 to 9.0% by mass, and more preferably 0.5 to 2.0% by mass. When the iron content is 0.1% by mass or more, the power storage device packaging material can be provided with superior moldability. When the iron content is 9.0% by mass or less, the power storage device packaging material can be provided with superior flexibility. Examples of soft aluminum alloy foils include aluminum alloy foils having the compositions defined in JIS H4160: 1994 A8021 H-O, JIS H4160: 1994 A8079 H-O, JIS H4000: 2014 A8021 P-O, and JIS H4000: 2014 A8079 P-O. These aluminum alloy foils may be optionally blended with silicon, magnesium, copper, manganese, and the like. The softening may be performed by annealing, for example.

Examples of the stainless steel foil include austenitic, ferritic, austenitic-ferritic, martensitic, and precipitation-hardening stainless steel foils. The stainless steel foil is preferably formed of an austenitic stainless steel, from the viewpoint of providing the power storage device packaging material with superior moldability.

Specific examples of the austenitic stainless steel that forms the stainless steel foil include SUS304, SUS301, and SUS316L, with SUS304 being particularly preferred.

The thickness of the barrier layer 3 as a metal foil may be such that it is sufficient to exhibit at least the function of the barrier layer to prevent the ingress of water, and may be, for example, about 9 to 200 µm. The thickness of the barrier layer 3 may be, for example, as follows: the upper limit is preferably about 85 µm or less, more preferably about 50 µm or less, still more preferably about 40 µm or less, and particularly preferably about 35 µm or less, while the lower limit is preferably about 10 µm or more, more preferably about 20 µm or more, and still more preferably about 25 µm or more. Preferred ranges of the thickness include from about 10 to 85 µm, from about 10 to 50 µm, from about 10 to 40 µm, from about 10 to 35 µm, from about 20 to 85 µm, from about 20 to 50 µm, from about 20 to 40 µm, from about 20 to 35 µm, from about 25 to 85 µm, from about 25 to 50 µm, from about 25 to 40 µm, and from about 25 to 35 µm. When the barrier layer 3 is formed of an aluminum alloy foil, the above-defined ranges are particularly preferred, with the range of about 25 to 50 µm and the range of about 25 to 40 µm being particularly preferred. In particular, when the barrier layer 3 is formed of a stainless steel foil, the thickness of the stainless steel foil may be, for example, as follows: the upper limit is preferably about 60 µm or less, more preferably about 50 µm or less, still more preferably about 40 µm or less, even more preferably about 30 µm or less, and particularly preferably about 25 µm or less, while the lower limit is preferably about 10 µm or more, and more preferably about 15 µm or more. Preferred ranges of the thickness include from about 10 to 60 µm, from about 10 to 50 µm, from about 10 to 40 µm, from about 10 to 30 µm, from about 10 to 25 µm, from about 15 to 60 µm, from about 15 to 50 µm, from about 15 to 40 µm, from about 15 to 30 µm, and from about 15 to 25 µm.

### [Corrosion-Resistant Film 3a, 3b]

The power storage device packaging material of the present disclosure includes a corrosion-resistant film on at least one surface of the barrier layer 3. The power storage device packaging material of the present disclosure may comprise the corrosion-resistant film 3a on only the surface of the barrier layer 3 facing the heat-sealable resin layer 4, or may comprise the corrosion-resistant films 3a and 3b on both surfaces of the barrier layer 3.

One feature of the power storage device packaging material of the present disclosure is that when the corrosion-resistant film3a is analyzed using time-of-flight secondary ion mass spectrometry, the P_{PO3/CrPO4} ratio of peak intensity P_{PO3} derived from PO₃⁻ to peak intensity P_{CrPO4} derived from CrPO₄^{~} is in the range of 6 to 120. Because the peak intensity ratio is in the specific range, and the below-described value of peak height ratio P_{OCO/C-C} analyzed by X-ray photoelectron spectroscopy is in the range of 0.10 or more and 0.50 or less, and because a compound having an isocyanate group (curing agent) is used to form the adhesive layer 5 that is in contact with the corrosion-resistant film, the power storage device packaging material of the present disclosure has excellent adhesion between the barrier layer having the corrosion-resistant film and the adhesive layer, even when water enters into the power storage device.

Moreover, in the present disclosure, when the corrosion-resistant film is analyzed using time-of-flight secondary ion mass spectrometry, a P_{PO2/CrPO4} ratio of peak intensity P_{PO2} derived from PO₂⁻ to peak intensity P_{CrPO4} derived from CrPO₄⁻ is preferably in the range of 7 to 70.

In the present disclosure, when the corrosion-resistant films 3a and 3b are provided on both surfaces of the barrier layer 3, it is sufficient that the peak intensity ratio P_{PO3/CrPO4}, and preferably also P_{PO2/CrPO4}, for the corrosion-resistant film on either one of the surfaces fall in the above-defined ranges; however, it is preferred that the peak intensity ratio P_{PO3/CrPO4}, and preferably also P_{PO2/CrPO4}, for both the corrosion-resistant films 3a and 3b fall in the above-defined ranges. In particular, because the adhesion between the corrosion-resistant film positioned on the adhesive layer-facing side of the barrier layer and the adhesive layer 5 adjacent to the corrosion-resistant film is easily decreased by the penetration of the electrolytic solution containing water, the power storage device packaging material of the present disclosure comprises the corrosion-resistant film 3a on at least the surface of the barrier layer 3 facing the heat-sealable resin layer 4.

In the present disclosure, it is sufficient that the P_{PO3/CrPO4} ratio of peak intensity P_{PO3} derived from PO₃⁻ to peak intensity P_{CrPO4} derived from CrPO₄⁻ fall in the range of 6 to 120; however, from the viewpoint of further increasing the adhesion, the lower limit for the P_{PO3/CrPO4} ratio may be, for example, about 10 or more, while the upper limit is preferably about 115 or less, more preferably about 110 or less, and still more preferably about 50 or less. Preferred ranges of the P_{PO3/CrPO4} ratio include from about 6 to 115, from about 6 to 110, from about 6 to 50, from about 10 to 120, from about 10 to 115, from about 10 to 110, from about 10 to 50, and from about 20 to 32, with the range of about 10 to 50, and even the range of about 20 to 32 being particularly preferred.

Moreover, the P_{PO2/CrPO4} ratio of peak intensity P_{PO2} derived from PO₂⁻ to peak intensity P_{CrPO4} derived from CrPO₄⁻ is preferably in the range of 7 to 70. From the viewpoint of further increasing the adhesion, the lower limit for the P_{PO2/CrPO4} ratio is preferably about 10 or more, while the upper limit is preferably about 65 or less, and more preferably about 50 or less. Preferred ranges of the P_{PO2/CrPO4} ratio include from about 7 to 70, from about 7 to 65, from about 7 to 50, from about 10 to 70, from about 10 to 65, from about 10 to 50, and from about 18 to 37, with the range of about 10 to 50, and even the range of about 18 to 37 being particularly preferred.

Specifically, the method of analyzing the corrosion-resistant film 3a, 3b using time-of-flight secondary ion mass spectrometry may be performed using a time-of-flight secondary ion mass spectrometer, under the following measurement conditions:

### (Measurement Conditions)

Primary ion: doubly charged ion of bismuth cluster (Bi₃⁺⁺)
Primary ion acceleration voltage: 30 kV
Mass range (m/z): 0-1500
Measurement range: 100 µm × 100 µm
Number of scans: 16 scans/cycle
Number of pixels (per side): 256 pixels
Etching ion: Ar gas cluster ion beam (Ar-GCIB)
Etching ion acceleration voltage: 5.0 kV

Additional features of the power storage device packaging material of the present disclosure are that when the corrosion-resistant film 3a is analyzed by X-ray photoelectron spectroscopy (XPS), the peak Poco derived from O-C=O bonds in the range of 287 eV to 290 eV and the peak P_{C-C} derived from C-C bonds at 285 eV are detected, and the value of peak height ratio P_{OCO/C-C} obtained by dividing the height of the peak P_{OCO} by the height of the peak P_{C-C} is in the range of 0.10 to 0.50. Because the value of peak height ratio P_{OCO/C-C} is in the specific range, the peak intensity ratio is in the specific range, and the P_{PO3/CrPO4} ratio of peak intensity P_{PO3} analyzed using time-of-flight secondary ion mass spectrometry described above is in the range of 6 to 120, and because a compound having an isocyanate group (curing agent) is used to form the adhesive layer 5 that is in contact with the corrosion-resistant film, the power storage device packaging material of the present disclosure has excellent adhesion between the barrier layer having the corrosion-resistant film and the adhesive layer, even when water enters into the power storage device. Because of the high adhesion between the corrosion-resistant film 3a and the adhesive layer 5, the power storage device packaging material of the present disclosure can exhibit high peeling strength and achieve excellent adhesion, even when a peel test is conducted under severe conditions, for example, as measured in the Examples, in which the specimen is immersed in the electrolytic solution containing water and placed at a high temperature.

From the viewpoint of further improving the adhesion between the corrosion-resistant film 3a and the adhesive layer 5 (and also between the below-described corrosion-resistant film 3b and the layer adjacent thereto), the lower limit for the value of peak height ratio P_{OCO/C-C} is preferably about 0.10, and more preferably 0.15, while the upper limit is preferably about 0.50. Preferred ranges of the value of peak height ratio P_{OCO/C-C} include from 0.10 to 0.50, with the range of about 0.15 to 0.50 being more preferred, and the range of about 0.20 to 0.30 being particularly preferred.

In the power storage device packaging material of the present disclosure, from the viewpoint of further increasing the adhesion between the corrosion-resistant film 3a and the adhesive layer 5 (and also between the below-described corrosion-resistant film 3b and the layer adjacent thereto), it is preferred that when the corrosion-resistant film 3a is analyzed by XPS, a peak P_{Cr} derived from Cr2p3/2 of a chromium compound be detected in the range of 576 eV to 581 eV. The detection of this peak can confirm that the chromium compound is contained in the composition for forming the corrosion-resistant film 3a by a chemical conversion treatment. Cr atoms play the central role of being coordinatively bound with -COOH groups, -NH₂ groups, -CN groups, or the like in the film, and therefore, form a crosslinked structure with functional groups having a structure that can serve as another ligand, such as a polycarboxylic acid or its ammonium salt, which leads to durability such as corrosion resistance and chemical resistance.

From the same the viewpoint, it is also preferred that in the power storage device packaging material of the present disclosure, when the corrosion-resistant film 3a is analyzed by X-ray photoelectron spectroscopy, a peak P_{P} derived from P2p of a phosphoric acid compound be detected in the range of 132 eV to 135 eV. The detection of the peak P_{P} can confirm that phosphoric acid or a salt thereof is contained in the composition for forming the corrosion-resistant film 3a by a chemical conversion treatment. It is known that phosphoric acid forms a highly durable film, such as a phosphoric acid compound film, on a metal surface by etching the metal surface in the chemical conversion treatment. Furthermore, in the presence of metal atoms with a high coordination number, such as Cr, phosphoric acid is incorporated into the above-described coordinative crosslinked structure, and is thus believed to contribute to the adhesion between the metal surface and the highly durable film.

From the same the viewpoint, it is also preferred that in the power storage device packaging material of the present disclosure, when the corrosion-resistant film 3a is analyzed by XPS, a peak derived from F1s of a fluorine compound be detected in the range of 685 eV to 689 eV. The detection of the peak P_{F} can confirm that the fluorine compound is contained in the composition for forming the corrosion-resistant film 3a by a chemical conversion treatment. When the barrier layer is an aluminum alloy, fluorine atoms bond to the aluminum alloy to form an aluminum fluoride film having durability higher than that of an aluminum oxide film.

Furthermore, from the same viewpoint, in the power storage device packaging material of a second aspect of the disclosure, it is preferred that when the corrosion-resistant film 3b is analyzed by X-ray photoelectron spectroscopy, at least the peak P_{Cr} of the peaks P_{Cr}, P_{P}, and P_{F} be detected, it is more preferred that in addition to the peak P_{Cr}, at least one of the peaks P_{P} and P_{F} be detected, and it is particularly preferred that all of the peaks P_{Cr}, P_{P}, and P_{F} be detected.

The power storage device packaging material of the present disclosure may comprise the corrosion-resistant film 3a having the above-described peaks detected by XPS analysis (i.e., the above-described value of peak height ratio P_{OCO/C-C}, and at least one of the peak P_{Cr} derived from a chromium compound, the peak P_{P} derived from a phosphoric acid compound, and the peak P_{F} derived from a fluorine compound), only on the surface of the barrier layer 3 facing the adhesive layer 5, or may also comprise the corrosion-resistant film 3b having these peaks on the surface of the barrier layer 3 facing the base material layer 1. When the corrosion-resistant film 3b is provided, the adhesion between the corrosion-resistant film 3b on the surface of the barrier layer 3 and the layer in contact with the corrosion-resistant film 3b (for example, the adhesive agent layer 2) can also be increased, which achieves the effect of preventing delamination between the base material layer 1 and the barrier layer 3 when exposed to high-temperature and high-humidity conditions, for example.

Specifically, the method of analyzing the corrosion-resistant film 3a, 3b using XPS may be performed using an X-ray photoelectron spectrometer, under the following measurement conditions. For X-ray photoelectron spectroscopy measurement conditions, reference may be made to JIS K0162:2010.

### (Measurement Conditions)

Incident x-rays: Mg Kα (non-monochromated x-rays, hv = 1253.6 eV)
X-ray output: 10 kV · 20 mA (200 W)
Photoelectron capture angle: 90 degrees (input lens positioned normal to the sample)
Measurement range: 6 mm φ
Peak shift correction: corrected such that the binding energy at which the peak intensity for C1s peaks is maximum is set to 285 eV.

To analyze peak positions (binding energy) for the corrosion-resistant film laminated on the power storage device packaging material using XPS, the layer (the heat-sealable resin layer, adhesive layer, or the like) laminated on the side of the barrier layer to be analyzed is physically peel off first. This peeling is done physically without using water, an organic solvent, an aqueous acid or alkali solution, or the like. After the peeling between the barrier layer and the adhesive layer, if the adhesive layer remains on the surface of the barrier layer, the remaining adhesive layer is etched off with Ar-GCIB. The surface of the barrier layer thus obtained is analyzed for the corrosion-resistant film, using XPS. Similarly, when the layer laminated on the side of the barrier layer to be analyzed is the adhesive agent layer or the like, the layer is physically peeled and etched off before the analysis is performed.

The presence or absence of the above-described peaks can be easily confirmed as detection peaks displayed on the monitor screen of the X-ray photoelectron spectrometer, if the peaks are evident. If the peak is small and ambiguous, the presence or absence of the peak may be determined based on the area, the half-width, and the presence or absence of a related peak for the same atom. Specifically, the determination is made by performing the following operations: First, (1) after background subtraction by the Shirley method and curve fitting, if it can be determined based on the peak area that the component is present at a content of 0.1% or more, the peak is determined to be present. As supplemental measures, for example, the following determination criteria may be employed: (2) the half-width of the peak that appears after fitting is greater than the energy resolution of the spectrometer; and (3) besides the main peak, peaks derived from photoelectrons from outer-shell orbitals than the orbital for the main peak are also observed. X-ray photoelectron spectrometers are usually accompanied with analysis software. In the examples, "Vision Processing" manufactured by Kratos, a manufacturer of the spectrometers, was used.

The corrosion-resistant film 3a, 3b can be formed by subjecting the surface of the barrier layer 3 to a chemical conversion treatment. From the viewpoint of satisfactorily forming a corrosion-resistant film having the above-described value of peak height ratio P_{OCO/C-C}, and at least one of the peak Per derived from a chromium compound, the peak P_{P} derived from a phosphoric acid compound, and the peak P_{F} derived from a fluorine compound, the corrosion-resistant film 3a, 3b is preferably formed of a composition containing at least an acrylic resin having a COOH group, a chromium compound, and a phosphoric acid compound. More specifically, the corrosion-resistant film 3a, 3b can be satisfactorily formed by subjecting the surface of the barrier layer 3 to a chemical conversion treatment, using a treatment solution containing these components. The chemical conversion treatment can be performed by applying the treatment solution to the surface of the barrier layer 3, followed by a baking treatment. By appropriately adjusting the composition of the treatment solution, the treatment method, and the treatment conditions, the peak intensity ratio P_{PO3/CrPO4} (and also the peak intensity ratio P_{PO2/CrPO4}) and the value of peak height ratio P_{OCO/C-C} can be adjusted in the above-defined range.

From the viewpoint of adjusting the peak intensity ratio P_{PO3/CrPO4} (and also the peak intensity ratio P_{PO2/CrPO4}) and the value of peak height ratio P_{OCO/C-C} in the above-defined ranges to further increase the adhesion between the corrosion-resistant film 3a and the adhesive layer 5 (and also between the corrosion-resistant film 3b and the layer adjacent thereto), the acrylic resin is preferably polyacrylic acid, an acrylic acid-methacrylic acid ester copolymer, an acrylic acid-maleic acid copolymer, an acrylic acid-styrene copolymer, or a derivative thereof, such as a sodium, ammonium, or amine salt. In particular, the acrylic resin is preferably a derivative of polyacrylic acid, such as an ammonium, sodium, or amine salt of polyacrylic acid. As used herein, the term polyacrylic acid refers to a polymer of acrylic acid. Alternatively, the acrylic resin is preferably a copolymer of acrylic acid with a dicarboxylic acid or a dicarboxylic anhydride, or preferably an ammonium, sodium, or amine salt of the copolymer of acrylic acid with a dicarboxylic acid or a dicarboxylic anhydride. A single acrylic resin may be used alone, or a mixture of two or more of acrylic resins may be used.

From the same the viewpoint, the weight average molecular weight of the acrylic resin is preferably about 1,000 to 1,000,000, more preferably about 3,000 to 800,000, and still more preferably about 10,000 to 800,000. A higher molecular weight increases the durability, but reduces the water solubility of the acrylic resin, which makes the coating solution unstable, leading to a lack of production stability. Conversely, a lower molecular weight reduces the durability. In the present disclosure, an acrylic resin having a weight average molecular weight of 1,000 or more achieves high durability, while an acrylic resin having a weight average molecular weight of 1,000,000 or less achieves good production stability. As used herein, the weight average molecular weight of the acrylic resin is the value measured by gel permeation chromatography (GPC), measured under conditions using polystyrene as standard samples.

The acrylic resin preferably has a higher acid value, because it is believed that the larger the number of COOH groups, the higher the effect of contributing to the adhesiveness. However, when the acrylic resin is in the form of a salt as described above, the acid value may not reflect the number of O-C=O bonds; thus, it is believed that analyzing O-C=O bonds from the XPS spectrum as disclosed herein can better reflect the adhesiveness.

From the same the viewpoint, the chromium compound is preferably at least one of chromium(III) fluoride and chromium(III) nitrate, and more preferably chromium(III) nitrate. As described above, the chromium compound is believed to form a coordinative crosslinked structure whose center is a Cr atom and a highly durable film structure with an aluminum fluoride.

An alternative method of imparting a crosslinked structure to the corrosion-resistant film 3a, 3b to form a highly durable film as described above is, for example, to use a crosslinking agent that reacts with COOH groups. A compound having an isocyanate group, a compound having an oxazoline group, a compound having an amino group, a compound having an epoxy group, or the like can be suitably used as the crosslinking agent.

It is preferred that the composition for forming the corrosion-resistant film 3a, 3b also contain phosphoric acid. Phosphoric acid has a cleaning effect on the barrier layer surface (specifically, the effect of removing any deteriorated oxide film and dirt on the barrier layer surface), and also has the effect of coordinating to metal ions such as chromium ions on the barrier layer surface as phosphate ions to form a crosslinked structure in the baked film. While phosphoric acid is not essential since carboxylate ions in the corrosion-resistant film are believed to have a similar effect, it is preferred to use phosphoric acid from the viewpoint of increasing the cleaning effect for the barrier layer to stably mass-produce the power storage device packaging material.

From the viewpoint of further increasing the adhesion between the corrosion-resistant film 3a and the adhesive layer 5 (and also between the corrosion-resistant film 3b and the layer adjacent thereto), particularly preferred compositions for the composition (treatment solution) for forming the corrosion-resistant film 3a, 3b include a composition containing polyacrylic acid, chromium(III) nitrate, and phosphoric acid; a composition containing polyacrylic acid and chromium(III) nitrate; a composition containing an acrylic acid-methacrylic acid ester copolymer, chromium(III) nitrate, and phosphoric acid; a composition containing a sodium salt of acrylic acid-maleic acid copolymer, chromium(III) nitrate, and phosphoric acid; a composition containing an acrylic acid-styrene copolymer, chromium(III) nitrate, and phosphoric acid; and compositions containing various salts of polyacrylic acid (for example, sodium salt, ammonium salt, and amine salt), chromium(III) nitrate, and phosphoric acid.

The proportion of phosphoric acid and/or a salt thereof to the chromium compound in the treatment solution is not limited; however, from the viewpoint of setting the peak intensity ratio P_{PO3/CrPO4} and also P_{PO2/CrPO4} in the above-defined respective ranges, the proportion of phosphoric acid and/or a salt thereof is preferably about 30 to 120 parts by mass, and more preferably about 40 to 110 parts by mass, per 100 parts by mass of the chromium compound. The phosphoric acid and salt thereof may be, for example, condensed phosphoric acid and a salt thereof.

The solids concentration in the treatment solution for forming the corrosion-resistant film is not limited as long as the corrosion-resistant film having the peak intensity ratio P_{PO3/CrPO4} (and also the peak intensity ratio P_{PO2/CrPO4}), the value of peak height ratio P_{OCO/C-C}, and at least one of the peak Per derived from a chromium compound, the peak P_{P} derived from a phosphoric acid compound, and the peak P_{F} derived from a fluorine compound is formed by applying the treatment solution to the barrier layer, followed by baking; for example, the solids concentration may be about 1 to 10% by mass.

The thickness of the corrosion-resistant film 3a, 3b is not limited; however, from the viewpoint of effectively increasing the adhesion between the corrosion-resistant film 3a and the adhesive layer 5 (and also between the corrosion-resistant film 3b and the layer adjacent thereto), it is preferably about 1 nm to 10 µm, more preferably about 1 to 100 nm, and still more preferably about 1 to 50 nm. The thickness of the corrosion-resistant film can be measured by observation with a transmission electron microscope, or using a combination of observation with a transmission electron microscope with energy dispersive X-ray spectroscopy or electron energy-loss spectroscopy.

From the same viewpoint, the amount of Cr in the corrosion-resistant film 3a, 3b per m² of the surface of the barrier layer 3, in terms of mass ratio, is preferably about 0.5 to 30%, more preferably about 1 to 20%, and still more preferably about 3 to 10%.

Examples of methods of applying the composition for form the corrosion-resistant film 3a, 3b to the surface of the barrier layer 3 include a bar coating method, a roll coating method, a gravure coating method, and an immersion method.

From the viewpoint of setting the peak intensity ratio P_{PO3/CrPO4} (and also the peak intensity ratio P_{PO2/CrPO4}) and the value of peak height ratio P_{OCO/C-C} in the above-defined predetermined ranges to improve the adhesion between the corrosion-resistant film 3a and the adhesive layer 5 (and also between the corrosion-resistant film 3b and the layer adjacent thereto), the heating temperature for baking the treatment solution into the corrosion-resistant film is preferably about 120 to 210°C, and more preferably about 130 to 190°C. From the same viewpoint, the baking time is preferably about 1 to 30 seconds, and more preferably about 5 to 10 seconds.

From the viewpoint of more efficiently performing the chemical conversion treatment of the surface of the barrier layer 3, it is preferred that prior to forming a corrosion-resistant film on the surface of the barrier layer 3, a degreasing treatment be performed using a known treatment method, such as an alkali immersion method, an electrolytic cleaning method, an acid cleaning method, an electrolytic acid cleaning method, or an acid activation method.

### [Heat-Sealable Resin Layer 4]

In the power storage device packaging material of the present disclosure, the heat-sealable resin layer 4 corresponds to an innermost layer, and is a layer (sealant layer) that is heat-sealed with itself during the assembly of a power storage device to exhibit the function of hermetically sealing the power storage device element.

While the resin that forms the heat-sealable resin layer 4 is not limited as long as it is heat-sealable, it is preferably a resin containing a polyolefin backbone, such as a polyolefin or an acid-modified polyolefin. The inclusion of the polyolefin backbone in the resin that forms the heat-sealable resin layer 4 can be analyzed by, for example, infrared spectroscopy or gas chromatography-mass spectrometry. It is also preferred that when the resin that forms the heat-sealable resin layer 4 is analyzed by infrared spectroscopy, a peak derived from maleic anhydride be detected. For example, when a maleic anhydride-modified polyolefin is measured by infrared spectroscopy, peaks derived from maleic anhydride are detected at a wavelength near 1760 cm⁻¹ and a wavelength near 1780 cm⁻¹. When the heat-sealable resin layer 4 is a layer formed of a maleic anhydride-modified polyolefin, the peaks derived from maleic anhydride are detected in infrared spectroscopic measurement. However, if the degree of acid modification is low, the peaks may be so small that they cannot be detected. In that case, the analysis can be performed by nuclear magnetic resonance spectroscopy.

Specific examples of the polyolefin include polyethylenes, such as low-density polyethylene, medium-density polyethylene, high-density polyethylene, and linear low-density polyethylene; ethylene-α-olefin copolymers; polypropylenes, such as homopolypropylene, block copolymers of polypropylene (for example, block copolymers of propylene and ethylene), and random copolymers of polypropylene (for example, random copolymers of propylene and ethylene); propylene-α-olefin copolymers; and terpolymers of ethylene-butene-propylene. Among the above, polypropylenes are preferred. When the polyolefin resin is a copolymer, it may be a block copolymer or a random copolymer. These polyolefin-based resins may be used alone or in combination.

The polyolefin may also be a cyclic polyolefin. The cyclic polyolefin is a copolymer of an olefin with a cyclic monomer. Examples of the olefin as a constituent monomer of the cyclic polyolefin include ethylene, propylene, 4-methyl-1-pentene, styrene, butadiene, and isoprene. Examples of the cyclic monomer as a constituent monomer of the cyclic polyolefin include cyclic alkenes, such as norbornene; and cyclic dienes, such as cyclopentadiene, dicyclopentadiene, cyclohexadiene, and norbornadiene. Among the above, cyclic alkenes are preferred, and norbornene is more preferred.

The acid-modified polyolefin is a polymer obtained by modifying the polyolefin by block polymerization or graft polymerization with an acid component. The polyolefin to be acid-modified may, for example, be the above-mentioned polyolefin, or a copolymer obtained by copolymerizing the above-mentioned polyolefin with a polar molecule, such as acrylic acid or methacrylic acid, or a polymer such as a crosslinked polyolefin. Examples of the acid component to be used for the acid modification include carboxylic acids and anhydrides thereof, such as maleic acid, acrylic acid, itaconic acid, crotonic acid, maleic anhydride, and itaconic anhydride.

The acid-modified polyolefin may also be an acid-modified cyclic polyolefin. The acid-modified cyclic polyolefin is a polymer obtained by replacing a portion of the monomers that form the cyclic polyolefin with an acid component, and copolymerizing them, or by block-polymerizing or graft-polymerizing an acid component onto the cyclic polyolefin. The cyclic polyolefin to be acid-modified is the same as described above. The acid component used for the acid modification is the same as that used for the modification of the above-mentioned polyolefin.

Examples of preferred acid-modified polyolefins include polyolefins modified with carboxylic acids or anhydrides thereof, polypropylenes modified with carboxylic acids or anhydrides thereof, maleic anhydride-modified polyolefins, and maleic anhydride-modified polypropylenes.

The heat-sealable resin layer 4 may be formed using a single resin alone, or may be formed using a blend polymer obtained by combining two or more resins. Furthermore, the heat-sealable resin layer 4 may be formed of only one layer, or may be formed of two or more layers composed of an identical resin or different resins.

The heat-sealable resin layer 4 may also optionally contain a lubricant and the like. The inclusion of a lubricant in the heat-sealable resin layer 4 can enhance the moldability of the power storage device packaging material. The lubricant is not limited, and may be a known lubricant. A single lubricant may be used alone, or a combination of two or more lubricants may be used.

While the lubricant is not limited, it is preferably an amide-based lubricant. Specific examples of the lubricant are those mentioned for the base material layer 1. A single lubricant may be used alone, or a combination of two or more lubricants may be used.

When a lubricant is present on the surface of the heat-sealable resin layer 4, the amount of the lubricant present is not limited, but is preferably about 10 to 50 mg/m², and more preferably about 15 to 40 mg/m², from the viewpoint of enhancing the moldability of the power storage device packaging material.

The lubricant present on the surface of the heat-sealable resin layer 4 may be exuded from the lubricant contained in the resin that forms the heat-sealable resin layer 4, or may be applied to the surface of the heat-sealable resin layer 4.

The thickness of the heat-sealable resin layer 4 is not limited as long as the heat-sealable resin layer is heat-sealed with itself to exhibit the function of hermetically sealing the power storage device element; for example, it is about 100 µm or less, preferably about 85 µm or less, and more preferably about 15 to 85 µm. For example, when the thickness of the below-described adhesive layer 5 is 10 µm or more, the thickness of the heat-sealable resin layer 4 is preferably about 85 µm or less, and more preferably about 15 to 45 µm. For example, when the thickness of the below-described adhesive layer 5 is less than 10 µm, or when the adhesive layer 5 is not provided, the thickness of the heat-sealable resin layer 4 is preferably about 20 µm or more, and more preferably about 35 to 85 µm.

### [Adhesive Layer 5]

In the power storage device packaging material of the present disclosure, the adhesive layer 5 is a layer that is provided between the heat-sealable resin layer 4 and the corrosion-resistant film 3a of the barrier layer 3, in order to strongly bond these layers. The adhesive layer 5 is formed in contact with the corrosion-resistant film formed on the surface of the barrier layer 3.

The adhesive layer 5 is formed of a resin capable of bonding the corrosion-resistant film 3a of the barrier layer 3 and the heat-sealable resin layer 4. In the power storage device packaging material of the present disclosure, the adhesive layer 5 is formed of a cured product of a resin composition containing a compound having an isocyanate group.

The resin contained in the resin composition used for forming the adhesive layer 5 preferably contains a polyolefin backbone. Examples of the resin include the polyolefin and the acid-modified polyolefin mentioned for the heat-sealable resin layer 4 described above. The inclusion of the polyolefin backbone in the resin of the adhesive layer 5 can be analyzed by, for example, infrared spectroscopy or gas chromatography-mass spectrometry, although the analytical method is not limited. It is also preferred that when the resin that forms the adhesive layer 5 is analyzed by infrared spectroscopy, a peak derived from maleic anhydride be detected. For example, when a maleic anhydride-modified polyolefin is measured by infrared spectroscopy, peaks derived from maleic anhydride are detected at a wavelength near 1760 cm⁻¹ and a wavelength near 1780 cm⁻¹. However, if the degree of acid modification is low, the peaks may be so small that they cannot be detected. In that case, the analysis can be performed by nuclear magnetic resonance spectroscopy.

While the compound having an isocyanate group is not limited, it is preferably a polyfunctional isocyanate compound, from the viewpoint of effectively improving the adhesion between the corrosion-resistant film 3a and the adhesive layer 5. The polyfunctional isocyanate compound is not limited as long as it is a compound having two or more isocyanate groups. Specific examples of polyfunctional isocyanate-based curing agents include pentane diisocyanate (PDI), isophorone diisocyanate (IPDI), hexamethylene diisocyanate (HDI), tolylene diisocyanate (TDI), diphenylmethane diisocyanate (MDI), polymer or isocyanurate forms thereof, mixtures thereof, and copolymers thereof with other polymers. Examples also include adducts, biurets, and isocyanurates.

The content of the compound having an isocyanate group in the adhesive layer 5 is preferably in the range of 0.1 to 50% by mass, and more preferably in the range of 0.5 to 40% by mass, in the resin composition for forming the adhesive layer 5. This can effectively improve the adhesion between the barrier layer 3 and the adhesive layer 5. In the resin composition for forming the adhesive layer 5, the amount of the compound having an isocyanate group is preferably about 0.5 to 6 parts by mass, and more preferably about 1 to 5 parts by mass, per 100 parts by mass of the resin.

From the viewpoint of further increasing the adhesion between the corrosion-resistant film 3a and the adhesive layer 5, the adhesive layer 5 preferably contains an acid-modified polyolefin in addition to the compound having an isocyanate group. The acid-modified polyolefin is particularly preferably a polyolefin modified with a carboxylic acid or an anhydride thereof, a polypropylene modified with a carboxylic acid or an anhydride thereof, a maleic anhydride-modified polyolefin, or a maleic anhydride-modified polypropylene.

In addition to the compound having an isocyanate group, the adhesive layer 5 may further contain other curing agents, such as a compound having an epoxy group and a compound having an oxazoline group. When unreacted curing agent such as the compound having an isocyanate group, the compound having an epoxy group, or the compound having an oxazoline group remains in the adhesive layer 5, the presence of the unreacted matter can be confirmed using a method selected from, for example, infrared spectroscopy, Raman spectroscopy, and time-of-flight secondary ion mass spectrometry (TOF-SIMS).

The content of the compound having an isocyanate group in the adhesive layer 5 is preferably in the range of 0.1 to 50% by mass, and more preferably in the range of 0.5 to 40% by mass, in the resin composition for forming the adhesive layer 5. This can effectively improve the adhesion between the barrier layer 3 and the adhesive layer 5.

Examples of the compound having an epoxy group include an epoxy resin. The epoxy resin is not limited as long as it is a resin capable of forming a crosslinked structure using an epoxy group present in the molecule, and a known epoxy resin may be used. The weight average molecular weight of the epoxy resin is preferably about 50 to 2,000, more preferably about 100 to 1,000, and still more preferably about 200 to 800. As used herein, the weight average molecular weight of the epoxy resin is the value measured by gel permeation chromatography (GPC), measured under conditions using polystyrene as standard samples.

Specific examples of the epoxy resin include glycidyl ether derivative of trimethylolpropane, bisphenol A diglycidyl ether, modified bisphenol A diglycidyl ether, novolac glycidyl ether, glycerol polyglycidyl ether, and polyglycerol polyglycidyl ether. These epoxy resins may be used alone or in combination.

In addition to the compound having an isocyanate group, when the compound having an epoxy group is also used as a curing agent of the adhesive layer 5, the compound having an epoxy group is used in an amount of about 20 to 200 parts by mass per 100 parts by mass of the compound having an isocyanate group.

The compound having an oxazoline group is not limited as long as it is a compound having an oxazoline backbone. Specific examples of the compound having an oxazoline group include those having a polystyrene main chain and those having an acrylic main chain. Examples of commercial products include the Epocros series manufactured by Nippon Shokubai Co., Ltd.

In addition to the compound having an isocyanate group, when the compound having an oxazoline group is also used as a curing agent of the adhesive layer 5, the compound having an oxazoline group is used in an amount of about 20 to 200 parts by mass per 100 parts by mass of the compound having an isocyanate group.

The thickness of the adhesive layer 5 is preferably about 10 µm or less, and more preferably about 5 µm or less, while it is preferably about 1 µm or more, and more preferably about 2 µm or more. Preferred ranges of the thickness include from about 1 to 10 µm, from about 1 to 5 µm, from about 2 to 10 µm, and from about 2 to 5 µm. The adhesive layer 5 can be formed by applying the resin composition for forming the adhesive layer 5, followed by curing by heating or the like.

### [Surface Coating Layer 6]

The power storage device packaging material of the present disclosure may optionally include a surface coating layer 6 on the base material layer 1 (opposite to the barrier layer 3 on the base material layer 1), for at least one of the purposes of improving the designability, electrolytic solution resistance, scratch resistance, and moldability, for example. The surface coating layer 6 is a layer positioned as an outermost layer of the power storage device packaging material when the power storage device is assembled using the power storage device packaging material.

The surface coating layer 6 may be formed using a resin such as polyvinylidene chloride, a polyester, a polyurethane, an acrylic resin, or an epoxy resin, for example.

When the resin that forms the surface coating layer 6 is a curable resin, the resin may be either a one-liquid curable resin or a two-liquid curable resin, preferably a two-liquid curable resin. Examples of two-liquid curable resins include two-liquid curable polyurethanes, two-liquid curable polyesters, and two-liquid curable epoxy resins. Among the above, two-liquid curable polyurethanes are preferred.

Examples of two-liquid curable polyurethanes include polyurethanes containing a base resin that contains a polyol compound and a curing agent that contains an isocyanate compound. Preferred is, for example, a two-liquid curable polyurethane containing a polyol such as a polyester polyol, a polyether polyol, or an acrylic polyol as a base resin, and an aromatic or aliphatic polyisocyanate as a curing agent. The polyol compound is preferably a polyester polyol having a hydroxyl group at a side chain, in addition to the hydroxyl groups at the ends of the repeating unit. When the surface coating layer 6 is formed of a polyurethane, the power storage device packaging material is provided with excellent electrolytic solution resistance.

At least one of the surface and the inside of the surface coating layer 6 may optionally contain additives, such as the above-mentioned lubricants, anti-blocking agents, matting agents, flame retardants, antioxidants, tackifiers, and anti-static agents, depending on the functionality and the like to be imparted to the surface coating layer 6 and the surface thereof. Examples of the additives include fine particles having an average particle diameter of about 0.5 nm to 5 µm. The average particle diameter of the additives is the median diameter measured using a laser diffraction/scattering particle size distribution analyzer.

The additives may be either inorganic or organic. The additives are also not limited in shape, and may be spherical, fibrous, plate-like, amorphous, or flake-like, for example.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acrylic, crosslinked styrene, crosslinked polyethylene, benzoguanamine, gold, aluminum, copper, and nickel. These additives may be used alone or in combination. Among these additives, silica, barium sulfate, and titanium oxide are preferred from the viewpoint of dispersion stability, costs, and the like. Surfaces of the additives may be subjected to various surface treatments, such as an insulation treatment and a dispersibility enhancing treatment.

Examples of methods of forming the surface coating layer 6 include, but are not limited to, applying the resin for forming the surface coating layer 6. When an additive is to be used in the surface coating layer 6, the resin blended with the additive may be applied.

The thickness of the surface coating layer 6 is not limited as long as it exhibits the above-described function as the surface coating layer 6; for example, it is about 0.5 to 10 µm, and preferably about 1 to 5 µm.

### 3. Method for Producing Power Storage Device Packaging Material

The method for producing the power storage device packaging material is not limited as long as it produces a laminate including the layers of the power storage device packaging material of the present disclosure. Examples of the method include a method comprising the step of laminating at least the base material layer 1, the barrier layer 3, the adhesive layer 5, and the heat-sealable resin layer 4 in this order. Specifically, a method for producing the power storage device packaging material of the present disclosure comprises the step of laminating at least a base material layer, a barrier layer, an adhesive layer, and a heat-sealable resin layer in this order to obtain a laminate, wherein the adhesive layer is a cured product of a resin composition containing a compound having an isocyanate group; a corrosion-resistant film is provided on at least a surface of the barrier layer facing the adhesive layer; when the corrosion-resistant film is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is in the range of 6 or more and 120 or less; when the corrosion-resistant film is analyzed by X-ray photoelectron spectroscopy, a peak P_{OCO} derived from C1s of O-C=O bonds in the range of 287 eV to 290 eV and a peak P_{C-C} derived from C1s of C-C bonds at 285 eV are detected; and a value of peak height ratio P_{OCO/C-C} obtained by dividing a height of the peak P_{OCO} by a height of the peak P_{C-C} is in the range of 0.10 or more and 0.50 or less.

One example of the method for producing the power storage device packaging material of the present disclosure is as follows: First, a laminate including the base material layer 1, the adhesive agent layer 2, and the barrier layer 3 in this order (the laminate may be hereinafter denoted as the "laminate A") is formed. Specifically, the laminate A can be formed using a dry lamination method as follows: The adhesive to be used for forming the adhesive agent layer 2 is applied to the base material layer 1 or to the barrier layer 3 whose surface has been optionally subjected to a chemical conversion treatment, using a coating method such as a gravure coating method or a roll coating method, and dried. Then, the barrier layer 3 or the base material layer 1 is laminated thereon, and the adhesive agent layer 2 is cured.

Subsequently, the heat-sealable resin layer 4 is laminated on the barrier layer 3 of the laminate A. When the heat-sealable resin layer 4 is to be laminated directly on the barrier layer 3, the heat-sealable resin layer 4 may be laminated onto the barrier layer 3 of the laminate A, using a method such as a thermal lamination method or an extrusion lamination method. When the adhesive layer 5 is to be provided between the barrier layer 3 and the heat-sealable resin layer 4, exemplary methods include the following: (1) a method in which the adhesive layer 5 and the heat-sealable resin layer 4 are extruded to be laminated on the barrier layer 3 of the laminate A (co-extrusion lamination or tandem lamination method); (2) a method in which a laminate in which the adhesive layer 5 and the heat-sealable resin layer 4 are laminated is separately formed, and this laminate is laminated on the barrier layer 3 of the laminate A using a thermal lamination method, or a method in which a laminate in which the adhesive layer 5 is laminated on the barrier layer 3 of the laminate A is formed, and this laminate is laminated to the heat-sealable resin layer 4 using a thermal lamination method; (3) a method in which the adhesive layer 5 that has been melted is poured between the barrier layer 3 of the laminate A and the heat-sealable resin layer 4 pre-formed into a sheet, and simultaneously the laminate A and the heat-sealable resin layer 4 are bonded with the adhesive layer 5 interposed therebetween (sandwich lamination method); and (4) a method in which the adhesive for forming the adhesive layer 5 is laminated on the barrier layer 3 of the laminate A by, for example, applying the adhesive onto the barrier layer 3 using solution coating and drying the adhesive, or drying and baking the adhesive, and then the heat-sealable resin layer 4 pre-formed into a sheet is laminated on the adhesive layer 5.

When the surface coating layer 6 is to be provided, the surface coating layer 6 is laminated on the surface of the base material layer 1 opposite to the barrier layer 3. The surface coating layer 6 can be formed by, for example, applying the above-mentioned resin for forming the surface coating layer 6 onto the surface of the base material layer 1. The order of the step of laminating the barrier layer 3 on the surface of the base material layer 1 and the step of laminating the surface coating layer 6 on the surface of the base material layer 1 is not limited. For example, the surface coating layer 6 may be formed on the surface of the base material layer 1, and then the barrier layer 3 may be formed on the surface of the base material layer 1 opposite to the surface coating layer 6.

The above-described procedures yield a laminate including the optional surface coating layer 6/base material layer 1/optional adhesive agent layer 2/barrier layer 3/adhesive layer 5/heat-sealable resin layer 4 in this order. The laminate may further be subjected to a heat treatment, in order to strengthen the adhesiveness of the optional adhesive agent layer 2.

In the power storage device packaging material, each layer that forms the laminate may be optionally subjected to a surface activation treatment, such as a corona treatment, a blast treatment, an oxidation treatment, or an ozone treatment, to thereby improve the processability. For example, ink printability on the surface of the base material layer 1 can be improved by corona-treating the surface of the base material layer 1 opposite to the barrier layer 3.

### 4. Uses of Power Storage Device Packaging Material

The power storage device packaging material of the present disclosure is used as a package for hermetically sealing and housing a power storage device element including a positive electrode, a negative electrode, and an electrolyte. That is, a power storage device can be provided by housing a power storage device element comprising at least a positive electrode, a negative electrode, and an electrolyte in a package formed of the power storage device packaging material of the present disclosure. To analyze the above-described peak intensities and the like in the power storage device packaging material of the present disclosure, the power storage device packaging material may be cut from the power storage device. When the power storage device packaging material is cut from the power storage device, a sample is obtained from a region of the power storage device, such as the top surface or bottom surface, where the heat-sealable resin layer is not heat-sealed with itself, and then the sample is subjected to analysis.

Specifically, a power storage device element comprising at least a positive electrode, a negative electrode, and an electrolyte is covered with the power storage device packaging material of the present disclosure such that a flange portion (region where the heat-sealable resin layer is contacted with itself) can be formed on the periphery of the power storage device element, with the metal terminal connected to each of the positive electrode and the negative electrode protruding to the outside. Then, the heat-sealable resin layer in the flange portion is heat-sealed with itself to hermetically seal the power storage device element. As a result, a power storage device is provided using the power storage device packaging material. When the power storage device element is housed in the package formed of the power storage device packaging material of the present disclosure, the package is formed such that the heat-sealable resin layer region of the power storage device packaging material of the present disclosure is positioned on the inner side (surface in contact with the power storage device element).

The power storage device packaging material of the present disclosure may be used for either primary power storage devices or secondary power storage devices, preferably secondary power storage devices. While the type of secondary power storage devices to which the power storage device packaging material of the present disclosure is applied is not limited, examples include lithium ion storage devices, lithium ion polymer storage devices, lead storage batteries, nickel-hydrogen storage batteries, nickel-cadmium storage batteries, nickel-iron storage batteries, nickel-zinc storage batteries, silver oxide-zinc storage batteries, metal-air storage devices, polyvalent cation storage devices, condensers, and capacitors. Among these secondary power storage devices, preferred secondary power storage devices to which the power storage device packaging material of the present disclosure is applied include lithium ion storage devices and lithium ion polymer storage devices.

In the power storage device packaging material of the present disclosure, the barrier layer having the corrosion-resistant film can retain the adhesion over a long period. The power storage device packaging material of the present disclosure is thus particularly useful as, for example, a packaging material for a large power storage device used in a vehicle such as a hybrid car or an electric car.

### Examples

The present disclosure will be hereinafter described in detail with reference to examples and comparative examples; however, the present disclosure is not limited to the examples.

### <Production of Power Storage Device Packaging Materials>

### Example 1

To a surface of a biaxially stretched nylon film (25 µm) as a base material layer, a barrier layer formed of an aluminum alloy foil (JIS H4160: 1994 A8021H-O, thickness: 40 µm), having corrosion-resistant films (thickness: 30 nm) formed on both surfaces by a chemical conversion treatment using the below-described method, was laminated using a dry lamination method. Specifically, a two-liquid urethane adhesive (a polyol compound and an aromatic isocyanate-based compound) was applied to one surface of the aluminum alloy foil having a corrosion-resistant film to form an adhesive agent layer (thickness: 3 µm). Subsequently, the adhesive agent layer on the barrier layer having a corrosion-resistant film and the biaxially stretched nylon film of the base material layer were laminated, and then the laminate was subjected to an aging treatment to prepare a laminate having the biaxially stretched nylon film/adhesive agent layer/barrier layer having corrosion-resistant films on both surfaces.

Subsequently, the barrier layer of the laminate was laminated to the heat-sealable resin layer with an adhesive layer interposed therebetween, using a dry lamination method. Specifically, a resin composition containing a maleic anhydride-modified polypropylene (molecular weight 70,000) and an isocyanate-based curing agent (HDI) in a mass ratio of 100:3 was applied to the surface of the barrier layer of the laminate (the surface of the corrosion-resistant film) such that the thickness after curing would be 2 µm, and dried. Subsequently, a random polypropylene film (thickness 40 µm) as the heat-sealable resin layer was laminated, and the resulting laminate was subjected to an aging treatment. This produced a power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order.

The corrosion-resistant films on the surfaces of the barrier layer were formed as follows: A treatment solution was prepared containing 2 parts by mass of an acrylic resin (polyacrylic acid (molecular weight 10,000; acid value 778)), 2 parts by mass of chromium nitrate, and 2 parts by mass of phosphoric acid, per 100 parts by mass of water, and the treatment solution was applied to both surfaces of the barrier layer (the film thickness after drying was 30 nm) and dried by heating for about 3 seconds at a temperature such that the surface temperature of the barrier layer was about 190°C.

### Example 2

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the adhesive layer was formed using a resin composition containing a maleic anhydride-modified polypropylene (molecular weight 150,000) and an isocyanate-based curing agent (HDI) in a mass ratio of 100:3.

### Example 3

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the molecular weight of the maleic anhydride-modified polypropylene contained in the resin composition for forming the adhesive layer was 110,000.

### Example 4

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the adhesive layer was formed using a resin composition containing 1.5 parts by mass of an isocyanate-based curing agent (HDI) and 1.5 parts by mass of an epoxy-based curing agent per 100 parts by mass of a maleic anhydride-modified polypropylene (molecular weight: 70,000).

### Example 5

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the adhesive layer was formed using a resin composition containing 3 parts by mass of an isocyanate-based curing agent (HDI) and 3 parts by mass of an epoxy-based curing agent per 100 parts by mass of a maleic anhydride-modified polypropylene (molecular weight 110,000).

### Example 6

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the treatment solution was dried by heating for about 120 seconds at a temperature such that the surface temperature of the barrier layer was about 190°C.

### Comparative Example 1

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the adhesive layer was formed using a resin composition containing 6 parts by mass of an epoxy-based curing agent (bisphenol A diglycidyl ether) per 100 parts by mass of a maleic anhydride-modified polypropylene (molecular weight 110,000).

### Comparative Example 2

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that a treatment solution containing 43 parts by mass of an aminated phenol polymer, 16 parts by mass of chromium fluoride, and 13 parts by mass of phosphoric acid was used as the treatment solution for forming the corrosion-resistant films on the surfaces of the barrier layer.

### Comparative Example 3

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Comparative Example 2, except that the adhesive layer was formed using a resin composition containing 2 parts by mass of an epoxy-based curing agent per 100 parts by mass of a maleic anhydride-modified polypropylene (molecular weight 70,000).

### Comparative Example 4

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that a treatment solution (containing water as a solvent, and having a solids concentration of about 10% by mass) containing 20 parts by mass of an inorganic phosphorus compound (sodium phosphate salt) per 100 parts by mass of cerium oxide was prepared as the treatment solution for forming the corrosion-resistant films on the surfaces of the barrier layer, and the treatment solution was applied to both surfaces of the barrier layer (the film thickness after drying was 20 nm) and dried by heating for about 3 to 6 seconds at a temperature such that the surface temperature of the barrier layer was about 190 to 230°C, to form the corrosion-resistant films on the surfaces of the barrier layer.

### Comparative Example 5

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the corrosion-resistant films on the surfaces of the barrier layer were formed using a treatment solution containing 2 parts by mass of an acrylic resin (polyacrylic acid (molecular weight 10,000; acid value 10)), 2 parts by mass of chromium nitrate, and 2 parts by mass of phosphoric acid, per 100 parts by mass of water.

### Comparative Example 6

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the corrosion-resistant films on the surfaces of the barrier layer were formed using a treatment solution containing 2 parts by mass of an acrylic resin (polyacrylic acid (molecular weight 10,000; acid value 2,200)), 2 parts by mass of chromium nitrate, and 2 parts by mass of phosphoric acid, per 100 parts by mass of water.

### Comparative Example 7

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the corrosion-resistant films on the surfaces of the barrier layer were formed using a treatment solution containing 2 parts by mass of an acrylic resin (polyacrylic acid (molecular weight 10,000; acid value 778)), 2 parts by mass of chromium nitrate, and 0.04 part by mass of phosphoric acid, per 100 parts by mass of water.

### Comparative Example 8

A power storage device packaging material including the base material layer (25 µm)/adhesive agent layer (3 µm)/barrier layer (40 µm) having corrosion-resistant films (30 nm) on both surfaces/adhesive layer (2 µm)/heat-sealable resin layer (40 µm) laminated in this order was produced as in Example 1, except that the corrosion-resistant films on the surfaces of the barrier layer were formed using a treatment solution containing 2 parts by mass of an acrylic resin (polyacrylic acid (molecular weight 10,000, acid value 778)), 2 parts by mass of chromium nitrate, and 21 parts by mass of phosphoric acid, per 100 parts by mass of water.

### <Time-of-Flight Secondary Ion Mass Spectrometry>

The analysis of the corrosion-resistant film was performed as follows: First, the barrier layer and the adhesive layer were peeled apart. This peeling was done physically without using water, an organic solvent, an aqueous acid or alkali solution, or the like. Because the adhesive layer remained on the surface of the barrier layer after the peeling between the barrier layer and the adhesive layer, the remaining adhesive layer was etched off with Ar-GCIB. The surface of the barrier layer thus obtained was analyzed for the corrosion-resistant film, using time-of-flight secondary ion mass spectrometry. Table 1 shows peak intensities P_{CrPO4}, P_{PO2}, and P_{PO3} derived from CrPO₄⁻, PO₂⁻, and PO₃⁻, respectively, as well as the P_{PO2/CrPO4} ratio of peak intensity P_{PO2} to peak intensity P_{CrPO4} and the P_{PO3/CrPO4} ratio of peak intensity P_{PO3} to peak intensity P_{CrPO4}. In Comparative Example 4, the cerium compound was used instead of the chromium compound in the treatment solution for the chemical conversion treatment, and thus, the items concerning peak intensity P_{CrPO4} of CrPO₄⁻are indicated as "-" in Table 1.

The details of the measurement apparatus and conditions for time-of-flight secondary ion mass spectrometry are as follows:
Measurement apparatus: time-of-flight secondary ion mass spectrometer TOF.SIMS5 manufactured by ION-TOF GmbH
(Measurement Conditions)
Primary ion: doubly charged ion of bismuth cluster (Bi₃⁺⁺)
Primary ion acceleration voltage: 30 kV
Mass range (m/z): 0-1500
Measurement range: 100 µm × 100 µm
Number of scans: 16 scans/cycle
Number of pixels (per side): 256 pixels
Etching ion: Ar gas cluster ion beam (Ar-GCIB)
Etching ion acceleration voltage: 5.0 kV

### <Analysis by X-Ray Photoelectron Spectroscopy (XPS)>

The analysis of the corrosion-resistant film by XPS was performed as follows: First, the barrier layer and the adhesive layer were peeled apart. This peeling was done physically without using water, an organic solvent, an aqueous acid or alkali solution, or the like. Because the adhesive layer remained on the surface of the barrier layer after the peeling between the barrier layer and the adhesive layer, the remaining adhesive layer was etched off with Ar-GCIB. The surface of the barrier layer thus obtained was analyzed for the corrosion-resistant film, using XPS, to observe the below-described peaks. Table 1 shows the value of peak height ratio P_{OCO/C-C} obtained by dividing the height of the peak P_{OCO} by the height of the peak P_{C-C}, and the presence or absence of the peak derived from the chromium compound and the peak derived from the phosphoric acid compound.

Each of these peaks was identified based on the following information:
P_{C-C}: peak derived from C1s of C-C bonds at 285 eV. As set forth in the measurement conditions, the entire XPS data was corrected such that the maximum intensity of this peak was set to 285 eV.
P_{OCO}: peak derived from C1s of O-C=O bonds in the range of 287 eV to 290 eV
P_{Cr}: peak derived from Cr2p3/2 of the chromium compound in the range of 576 eV to 581 eV
P_{P}: peak derived from P2p of the phosphoric acid compound in the range of 132 eV to 135 eV

Details of the measurement apparatus and conditions for X-ray photoelectron spectroscopy are as follows:
Measurement apparatus: "ESCA-3400"; Shimadzu Corporation (manufactured by Kratos, UK)
Incident x-rays: Mg Kα (non-monochromated x-rays, hv = 1253.6 eV)
X-ray output: 10 kV · 20 mA (200 W)
Photoelectron capture angle: 90 degrees (input lens positioned normal to the sample)
Measurement range: 6 mm φ
Peak shift correction: corrected such that the binding energy at which the peak intensity for C1s peaks was maximum was set to 285 eV.

### <Evaluation of Adhesion>

The adhesion between the barrier layer and the heat-sealable resin layer when an electrolytic solution containing water adheres to the power storage device packaging material was evaluated by measuring the peeling strength (N/15 mm), using the following method.

First, each of the power storage device packaging materials obtained above was cut into a size of 15 mm (TD: Transverse Direction; lateral direction) × 100 mm (MD: Machine Direction; longitudinal direction), and the heat-sealable resin layer and the barrier layer in the cut piece were peeled apart over a length of about 10 mm to prepare a specimen. The specimen was placed in a glass bottle, and then an electrolytic solution containing water (lithium hexafluorophosphate (concentration in the solution: 1 × 10³ mol/m³; water concentration: 1,000 ppm) in a solution obtained by mixing ethylene carbonate, diethyl carbonate, and dimethyl carbonate at a volume ratio of 1:1:1) was placed in the glass bottle such that the entire specimen was immersed in the electrolytic solution. In this state, the glass bottle was sealed with a cap. The sealed glass bottle was placed in an oven set at 85°C, and allowed to stand for 24 hours. Subsequently, the glass bottle was removed from the oven, and the specimen was removed from the glass bottle and washed with water. Thereafter, the specimen was impregnated into a container containing water.

Subsequently, the heat-sealable resin layer and the barrier layer of the specimen were peeled apart. Using a tensile testing machine (trade name AGS-XPlus manufactured by Shimadzu Corporation), the adhesive layer side and the barrier layer side of the specimen were pulled in the 180° direction at a gauge length of 50 mm and a rate of 50 mm/minute, and the peeling strength (N/15 mm) of the specimen was measured. The peeling strength of the specimen was measured within 10 minutes after the specimen was removed from the glass bottle and washed with water, while the surface was still wet. The strength when the gauge length reached 65 mm was determined as "the peeling strength immediately after removal" of the specimen. Moreover, after the specimen was removed from the glass bottle and washed with water, and thereafter allowed to be impregnated in the container containing water for 3 hours, the electrolytic solution dissolved in the water, and the swelling of the heat-sealable resin layer disappeared (because of the penetration of the electrolytic solution). For the specimen in this state, the peeling strength was similarly measured as "the peeling strength after 3 hr". Table 1 shows the results for each specimen.

On the other hand, the initial adhesion was evaluated as follows: First, each of the power storage device packaging materials obtained above was cut into a size of 15 mm (TD) × 100 mm (MD) to prepare a specimen. Subsequently, the heat-sealable resin layer and the barrier layer of the specimen were peeled apart, and, using a tensile testing machine (trade name AGS-XPlus manufactured by Shimadzu Corporation), the heat-sealable resin layer and the barrier layer of the specimen were pulled in the 180° direction at a gauge length of 50 mm and a rate of 50 mm/minute, and the peeling strength (N/15 mm) of the specimen was measured. The strength when the gauge length reached 65 mm was determined as the initial adhesion. The results are shown in Table 1. Table 1 also shows the retention ratio of each peeling strength as the adhesion after the immersion in the electrolytic solution, relative to the peeling strength as the initial adhesion taken as 100%. It should be noted that when the heat-sealable resin layer and the barrier layer were peeled apart, the adhesive layer positioned between these layers was laminated on either one of or both the heat-sealable resin layer and the barrier layer.

**[Table 1]**

| | Corrosion-resistant film | Adhesive layer | XPS | | | Time-of-flight secondary ion mass spectrometry | | | | | **Initial** adhesion | Adhesion after immersion in electrolytic solution containing water 85°C, after 24 hr | |
|---|---|---|---|---|---|---|---|---|---|---|---|---|---|
| | | | Value of peak height ratio P_{OCO/C-C} | Peak derived from chromium compound | Peak derived from phosphoric acid compound | Peak Intensity | | | Peak Intensity ratio | | Peeling strength (N/15 mm) | Peeling strength (N/15 mm) (peeling strength retention ratio to initial strength) | |
| | Resin | Curing agent | | | | P_{PO2} | P_{PO3} | P_{CrPO4} | P_{PO2}/P_{CrPO4} | P_{PO3}/P_{CrPO4} | | Immediately after removal | after 3 hr |
| Ex. 1 | Acrylic | Isocyanate-based | 0.24 | Present | Present | 2.4×10⁴ | 2.2×10⁴ | 7.5×10² | 32.0 | 29.3 | 14.6 | 12.7 (87%) | 13.8 (95%) |
| Ex. 2 | Acrylic | Isocyanate-based | 0.24 | Present | Present | 2.4×10⁴ | 2.2×10⁴ | 7.5×10² | 32.0 | 29.3 | 16.5 | 14.9 (90%) | 15.8 (96%) |
| Ex. 3 | Acrylic | Isocyanate-based | 0.24 | Present | Present | 2.4×10⁴ | 2.2×10⁴ | 7.5×10² | 32.0 | 29.3 | 15.2 | 11.8 (78%) | 13.4 (88%) |
| Ex. 4 | Acrylic | Mixture of isocyanate-based + epoxy-based | 0.24 | Present | Present | 2.4×10⁴ | 2.2×10⁴ | 7.5×10² | 32.0 | 29.3 | 12.6 | 13.1 (104%) | 14.6 (116%) |
| Ex. 5 | Acrylic | Mixture of isocyanate-based + epoxy-based | 0.24 | Present | Present | 2.4×10⁴ | 2.2×10⁴ | 7.5×10² | 32.0 | 29.3 | 13.8 | 10.7 (78%) | 14.5 (105%) |
| Ex. 6 | Acrylic | Isocyanate-based | 0.24 | Present | Present | 5.7×10⁴ | 7.2×10⁴ | 3.0×10³ | 19.0 | 24.0 | 15.6 | 10.4 (67%) | 12.6 (81%) |
| Comp. Ex. 1 | Acrylic | Epoxy-based | 0.24 | Present | Present | 2.4×10⁴ | 2.2×10⁴ | 7.5×10² | 32.0 | 29.3 | 12.7 | 4.5 (35%) | 12.1 (95%) |
| Comp. Ex. 2 | Phenolic | Isocyanate-based | 0.00 | Present | Present | 6.3×10⁵ | 1.0×10⁶ | 3.8×10⁴ | 16.6 | 26.3 | 14.7 | 5.3 (36%) | 4.7 (32%) |
| Comp. Ex. 3 | Phenolic | Epoxy-based | 0.00 | Present | Present | 6.3×10⁵ | 1.0×10⁶ | 3.8×10⁴ | 16.6 | 26.3 | 12.6 | 0.9 (7%) | 1.9 (15%) |
| Comp. Ex. 4 | - | Isocyanate-based | 0.00 | Absent | Present | 4.0×10⁵ | 3.3×10⁵ | 3.5×10³ (CePO4) | - | - | 25.0 | 7.0 (28%) | 4.1 (16%) |
| Comp. Ex. 5 | Acrylic | Isocyanate-based | 0.05 | Present | Present | 5.7×10⁴ | 7.2×10⁴ | 3.0×10³ | 19.0 | 24. 0 | 3.2 | 1.2 (38%) | 1.8 (56%) |
| Comp. Ex. 6 | Acrylic | Isocyanate-based | 0.60 | Present | Present | 5.7×10⁴ | 7.2×10⁴ | 3.0×10³ | 19.0 | 24.0 | 14.0 | 4.2 (30%) | 11.7 (84%) |
| Comp. Ex. 7 | Acrylic | Isocyanate-based | 0.24 | Present | Present | 1.3×10⁴ | 3.9×10⁴ | 2.2×10⁴ | 0.6 | 1.8 | 14.5 | 3.2 (22%) | 4.4 (30%) |
| Comp. Ex. 8 | Acrylic | Isocyanate-based | 0.24 | Present | Present | 6.0×10⁴ | 4.0×10⁵ | 1.6×10³ | 37.5 | 250 | 6.5 | 2.8 (43%) | 3.3 (51%) |

The power storage device packaging materials of Examples 1 to 6 each comprise a laminate comprising at least the base material layer, the barrier layer, the adhesive layer, and the heat-sealable resin layer in this order, wherein the adhesive layer is a cured product of a resin composition containing a compound having an isocyanate group. Furthermore, a corrosion-resistant film is provided on at least the surface of the barrier layer facing the adhesive layer; when the corrosion-resistant film is analyzed using time-of-flight secondary ion mass spectrometry, the P_{PO3/CrPO4} ratio of peak intensity P_{PO3} derived from PO₃⁻ to peak intensity P_{CrPO4} derived from CrPO₄⁻ is in the range of 6 or more and 120 or less; when the corrosion-resistant film is analyzed by X-ray photoelectron spectroscopy, the peak P_{OCO} derived from C1s of O-C=O bonds in the range of 287 eV to 290 eV and the peak P_{C-C} derived from C1s of C-C bonds at 285 eV are detected; and the value of peak height ratio P_{OCO/C-C} obtained by dividing the height of the peak P_{OCO} by the height of the peak P_{C-C} is in the range of 0.10 or more and 0.50 or less. As is clear from the results shown in Table 1, the power storage device packaging materials of Examples 1 to 6 in which the corrosion-resistant films and the adhesive layer have these features exhibit excellent adhesion between the barrier layer having corrosion-resistant films and the adhesive layer, even after being immersed in the electrolytic solution containing water.

### Reference Signs List

1: base material layer
2: adhesive agent layer
3: barrier layer
3a, 3b: corrosion-resistant film
4: heat-sealable resin layer
5: adhesive layer
6: surface coating layer
10: power storage device packaging material

## Claims

1. A power storage device packaging material comprising:
a laminate comprising at least a surface coating layer, a base material layer, a black adhesive agent layer, a barrier layer, an adhesive layer, and a heat-sealable resin layer in this order, wherein
the adhesive layer is a cured product of a resin composition containing a compound having an isocyanate group,
a corrosion-resistant film is provided on at least a surface of the barrier layer facing the adhesive layer,
when the corrosion-resistant film is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is in the range of 6 or more and 120 or less,
when the corrosion-resistant film is analyzed by X-ray photoelectron spectroscopy, a peak P_{OCO} derived from C1s of O-C=O bonds in the range of 287 eV to 290 eV and a peak P_{C-C} derived from C1s of C-C bonds at 285 eV are detected, and
a value of peak height ratio P_{OCO/C-C} obtained by dividing a height of the peak P_{OCO} by a height of the peak P_{C-C} is in the range of 0.10 or more and 0.50 or less.

2. A power storage device packaging material comprising:
a laminate comprising at least a base material layer, a barrier layer, an adhesive layer, and a heat-sealable resin layer in this order, wherein
the base material layer includes polyester film or polyamide film,
the adhesive layer is a cured product of a resin composition containing a compound having an isocyanate group,
a corrosion-resistant film is provided on at least a surface of the barrier layer facing the adhesive layer,
when the corrosion-resistant film is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is in the range of 6 or more and 120 or less,
when the corrosion-resistant film is analyzed by X-ray photoelectron spectroscopy, a peak P_{OCO} derived from C1s of O-C=O bonds in the range of 287 eV to 290 eV and a peak P_{C-C} derived from C1s of C-C bonds at 285 eV are detected, and
a value of peak height ratio P_{OCO/C-C} obtained by dividing a height of the peak P_{OCO} by a height of the peak P_{C-C} is in the range of 0.10 or more and 0.50 or less.

3. A power storage device packaging material comprising:
a laminate comprising at least a base material layer, a layer formed of a cured product of a resin composition containing a compound having an isocyanate group, a barrier layer, an adhesive layer, and a heat-sealable resin layer in this order, wherein
the adhesive layer is a cured product of a resin composition containing a compound having an isocyanate group,
a corrosion-resistant film is provided on at least a surface of the barrier layer facing the adhesive layer,
when the corrosion-resistant film is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is in the range of 6 or more and 120 or less,
when the corrosion-resistant film is analyzed by X-ray photoelectron spectroscopy, a peak P_{OCO} derived from C1s of O-C=O bonds in the range of 287 eV to 290 eV and a peak P_{C-C} derived from C1s of C-C bonds at 285 eV are detected, and
a value of peak height ratio P_{OCO/C-C} obtained by dividing a height of the peak P_{OCO} by a height of the peak P_{C-C} is in the range of 0.10 or more and 0.50 or less.

4. The power storage device packaging material according to any one of claims 1 to 3, wherein when the corrosion-resistant film is analyzed by X-ray photoelectron spectroscopy, a peak derived from Cr2p3/2 of a chromium compound is detected in the range of 576 eV to 581 eV.

5. The power storage device packaging material according to any one of claims 1 to 4, wherein when the corrosion-resistant film is analyzed by X-ray photoelectron spectroscopy, a peak derived from P2p of a phosphoric acid compound is detected in the range of 132 eV to 135 eV.

6. The power storage device packaging material according to any one of claims 1 to 5, wherein when the corrosion-resistant film is analyzed by X-ray photoelectron spectroscopy, a peak derived from F1s of a fluorine compound is detected in the range of 685 eV to 689 eV.

7. The power storage device packaging material according to any one of claims 1 to 6, wherein the corrosion-resistant film is formed of a composition containing at least an acrylic resin having a COOH group, a chromium compound, and a phosphoric acid compound.

8. The power storage device packaging material according to claim 7, wherein the acrylic resin is at least one selected from the group consisting of polyacrylic acid, an ammonium salt of polyacrylic acid, a sodium salt of polyacrylic acid, and an amine salt of polyacrylic acid.

9. The power storage device packaging material according to claim 7, wherein the acrylic resin is at least one selected from the group consisting of a copolymer of acrylic acid with a dicarboxylic acid or a dicarboxylic anhydride, an ammonium salt of the copolymer, a sodium salt of the copolymer, and an amine salt of the copolymer.

10. The power storage device packaging material according to any one of claims 7 to 9, wherein the chromium compound is at least one of chromium(III) fluoride and chromium(III) nitrate.

11. The power storage device packaging material according to any one of claims 1 to 10, wherein the resin contained in the resin composition that forms the adhesive layer has a polyolefin backbone.

12. The power storage device packaging material according to any one of claims 1 to 11, wherein the adhesive layer contains an acid-modified polyolefin.

13. The power storage device packaging material according to any one of claims 1 to 12, wherein when the adhesive layer is analyzed by infrared spectroscopy, a peak derived from maleic anhydride is detected.

14. The power storage device packaging material according to claim 12, wherein the acid-modified polyolefin of the adhesive layer is a maleic anhydride-modified polypropylene, and
the heat-sealable resin layer contains a polypropylene.

15. A method for producing a power storage device packaging material comprising the step of:
laminating at least a surface coating layer, a base material layer, a black adhesive agent layer, a barrier layer, an adhesive layer, and a heat-sealable resin layer in this order to obtain a laminate, wherein
the adhesive layer is a cured product of a resin composition containing a compound having an isocyanate group,
a corrosion-resistant film is provided on at least a surface of the barrier layer facing the adhesive layer,
when the corrosion-resistant film is analyzed using time-of-flight secondary ion mass spectrometry, a P_{PO3/CrPO4} ratio of peak intensity P_{PO3} derived from PO₃⁻ to peak intensity P_{CrPO4} derived from CrPO₄⁻ is in the range of 6 or more and 120 or less,
when the corrosion-resistant film is analyzed by X-ray photoelectron spectroscopy, a peak P_{OCO} derived from C1s of O-C=O bonds in the range of 287 eV to 290 eV and a peak P_{C-C} derived from C1s of C-C bonds at 285 eV are detected, and
a value of peak height ratio P_{OCO/C-C} obtained by dividing a height of the peak P_{OCO} by a height of the peak P_{C-C} is in the range of 0.10 or more and 0.50 or less.

16. A power storage device comprising a power storage device element comprising at least a positive electrode, a negative electrode, and an electrolyte, wherein the power storage device element is housed in a package formed of the power storage device packaging material according to any one of claims 1 to 14.

## Patentansprüche

1. Energiespeichervorrichtungs-Verpackungsmaterial, umfassend:
ein Laminat, das mindestens eine Oberflächenbeschichtungsschicht, eine Grundmaterialschicht, eine schwarze Klebstoffschicht, eine Sperrschicht, eine Haftmittelschicht und eine heißsiegelfähige Harzschicht in dieser Reihenfolge umfasst, wobei
die Haftmittelschicht ein gehärtetes Produkt aus einer Harzzusammensetzung ist, die eine Verbindung mit einer Isocyanatgruppe enthält,
ein korrosionsbeständiger Film auf mindestens einer der Haftmittelschicht zugewandten Oberfläche der Sperrschicht bereitgestellt ist,
wenn der korrosionsbeständige Film unter Verwendung von Flugzeit-Sekundärionen-Massenspektrometrie analysiert wird, ein P_{PO3/CrPO4}-Verhältnis der Peakintensität P_{PO3}, abgeleitet von PO₃⁻, zur Peakintensität P_{CrPO4}, abgeleitet von CrPO₄⁻, im Bereich von 6 oder mehr und 120 oder weniger liegt,
wenn der korrosionsbeständige Film durch Röntgenphotoelektronenspektroskopie analysiert wird, ein Peak Poco, abgeleitet von C1s der O-C=O-Bindungen, im Bereich von 287 eV bis 290 eV und ein Peak Pc-c, abgeleitet von C1s der C-C-Bindungen, bei 285 eV detektiert werden, und
ein Wert des Peakhöhenverhältnisses P_{OCO/C-C}, erhalten durch Dividieren einer Höhe des Peaks P_{OCO} durch eine Höhe des Peaks P_{C-C}, im Bereich von 0,10 oder mehr und 0,50 oder weniger liegt.

2. Energiespeichervorrichtungs-Verpackungsmaterial, umfassend:
ein Laminat, das mindestens eine Grundmaterialschicht, eine Sperrschicht, eine Haftmittelschicht und eine heißsiegelfähige Harzschicht in dieser Reihenfolge umfasst, wobei
die Grundmaterialschicht eine Polyesterfolie oder eine Polyamidfolie einschließt,
die Haftmittelschicht ein gehärtetes Produkt aus einer Harzzusammensetzung ist, die eine Verbindung mit einer Isocyanatgruppe enthält,
ein korrosionsbeständiger Film auf mindestens einer der Haftmittelschicht zugewandten Oberfläche der Sperrschicht bereitgestellt ist,
wenn der korrosionsbeständige Film unter Verwendung von Flugzeit-Sekundärionen-Massenspektrometrie analysiert wird, ein P_{PO3/CrPO4}-Verhältnis der Peakintensität P_{PO3}, abgeleitet von PO₃⁻, zur Peakintensität P_{CrPO4}, abgeleitet von CrPO₄⁻, im Bereich von 6 oder mehr und 120 oder weniger liegt,
wenn der korrosionsbeständige Film durch Röntgenphotoelektronenspektroskopie analysiert wird, ein Peak Poco, abgeleitet von C1s der O-C=O-Bindungen, im Bereich von 287 eV bis 290 eV und ein Peak Pc-c, abgeleitet von C1s der C-C-Bindungen, bei 285 eV detektiert werden, und
ein Wert des Peakhöhenverhältnisses P_{OCO/C-C}, erhalten durch Dividieren einer Höhe des Peaks P_{OCO} durch eine Höhe des Peaks P_{C-C}, im Bereich von 0,10 oder mehr und 0,50 oder weniger liegt.

3. Energiespeichervorrichtungs-Verpackungsmaterial, umfassend:
ein Laminat, das mindestens eine Grundmaterialschicht, eine aus einem gehärteten Produkt einer Harzzusammensetzung, die eine Verbindung mit einer Isocyanatgruppe enthält, gebildete Schicht, eine Sperrschicht, eine Haftmittelschicht und eine heißsiegelfähige Harzschicht in dieser Reihenfolge umfasst, wobei
die Haftmittelschicht ein gehärtetes Produkt aus einer Harzzusammensetzung ist, die eine Verbindung mit einer Isocyanatgruppe enthält,
ein korrosionsbeständiger Film auf mindestens einer der Haftmittelschicht zugewandten Oberfläche der Sperrschicht bereitgestellt ist,
wenn der korrosionsbeständige Film unter Verwendung von Flugzeit-Sekundärionen-Massenspektrometrie analysiert wird, ein P_{PO3/CrPO4}-Verhältnis der Peakintensität P_{PO3}, abgeleitet von PO₃⁻, zur Peakintensität P_{CrPO4}, abgeleitet von CrPO₄⁻, im Bereich von 6 oder mehr und 120 oder weniger liegt,
wenn der korrosionsbeständige Film durch Röntgenphotoelektronenspektroskopie analysiert wird, ein Peak Poco, abgeleitet von C1s der O-C=O-Bindungen, im Bereich von 287 eV bis 290 eV und ein Peak Pc-c, abgeleitet von C1s der C-C-Bindungen, bei 285 eV detektiert werden, und
ein Wert des Peakhöhenverhältnisses P_{OCO/C-C}, erhalten durch Dividieren einer Höhe des Peaks P_{OCO} durch eine Höhe des Peaks P_{C-C}, im Bereich von 0,10 oder mehr und 0,50 oder weniger liegt.

4. Energiespeichervorrichtungs-Verpackungsmaterial nach einem der Ansprüche 1 bis 3, wobei bei der Analyse des korrosionsbeständigen Films durch Röntgenphotoelektronenspektroskopie ein Peak, abgeleitet von Cr2p3/2 einer Chromverbindung, im Bereich von 576 eV bis 581 eV nachgewiesen wird.

5. Energiespeichervorrichtungs-Verpackungsmaterial nach einem der Ansprüche 1 bis 4, wobei bei der Analyse des korrosionsbeständigen Films durch Röntgenphotoelektronenspektroskopie ein Peak, abgeleitet von P2p einer Phosphorsäureverbindung, im Bereich von 132 eV bis 135 eV nachgewiesen wird.

6. Energiespeichervorrichtungs-Verpackungsmaterial nach einem der Ansprüche 1 bis 5, wobei bei der Analyse des korrosionsbeständigen Films durch Röntgenphotoelektronenspektroskopie ein Peak, abgeleitet von F1s einer Fluorverbindung, im Bereich von 685 eV bis 689 eV nachgewiesen wird.

7. Energiespeichervorrichtungs-Verpackungsmaterial nach einem der Ansprüche 1 bis 6, wobei der korrosionsbeständige Film aus einer Zusammensetzung gebildet ist, die mindestens ein Acrylharz mit einer COOH-Gruppe, eine Chromverbindung und eine Phosphorsäureverbindung enthält.

8. Energiespeichervorrichtungs-Verpackungsmaterial nach Anspruch 7, wobei das Acrylharz mindestens eines ist, ausgewählt aus der Gruppe, bestehend aus Polyacrylsäure, einem Ammoniumsalz von Polyacrylsäure, einem Natriumsalz von Polyacrylsäure und einem Aminsalz von Polyacrylsäure.

9. Energiespeichervorrichtungs-Verpackungsmaterial nach Anspruch 7, wobei das Acrylharz mindestens eines ist, ausgewählt aus der Gruppe, bestehend aus einem Copolymer von Acrylsäure mit einer Dicarbonsäure oder einem Dicarbonsäureanhydrid, einem Ammoniumsalz des Copolymers, einem Natriumsalz des Copolymers und einem Aminsalz des Copolymers.

10. Energiespeichervorrichtungs-Verpackungsmaterial nach einem der Ansprüche 7 bis 9, wobei die Chromverbindung mindestens eines von Chrom(III)fluorid und Chrom(III)nitrat ist.

11. Energiespeichervorrichtungs-Verpackungsmaterial nach einem der Ansprüche 1 bis 10, wobei das in der Harzzusammensetzung enthaltene Harz, das die Haftmittelschicht bildet, ein Polyolefin-Grundgerüst aufweist.

12. Energiespeichervorrichtungs-Verpackungsmaterial nach einem der Ansprüche 1 bis 11, wobei die Haftmittelschicht ein säuremodifiziertes Polyolefin enthält.

13. Energiespeichervorrichtungs-Verpackungsmaterial nach einem der Ansprüche 1 bis 12, wobei bei der Analyse der Haftmittelschicht durch Infrarotspektroskopie ein von Maleinsäureanhydrid abgeleiteter Peak nachgewiesen wird.

14. Energiespeichervorrichtungs-Verpackungsmaterial nach Anspruch 12, wobei das säuremodifizierte Polyolefin der Haftmittelschicht ein mit Maleinsäureanhydrid modifiziertes Polypropylen ist, und
die heißsiegelfähige Harzschicht ein Polypropylen enthält.

15. Verfahren zur Herstellung eines Energiespeichervorrichtungs-Verpackungsmaterials, umfassend den Schritt des
Laminierens mindestens einer Oberflächenbeschichtungsschicht, einer Grundmaterialschicht, einer schwarzen Klebstoffschicht, einer Sperrschicht, einer Haftmittelschicht und einer heißsiegelfähigen Harzschicht in dieser Reihenfolge, um ein Laminat zu erhalten, wobei
die Haftmittelschicht ein gehärtetes Produkt aus einer Harzzusammensetzung ist, die eine Verbindung mit einer Isocyanatgruppe enthält,
ein korrosionsbeständiger Film auf mindestens einer der Haftmittelschicht zugewandten Oberfläche der Sperrschicht bereitgestellt ist,
wenn der korrosionsbeständige Film unter Verwendung von Flugzeit-Sekundärionen-Massenspektrometrie analysiert wird, ein P_{PO3/CrPO4}-Verhältnis der Peakintensität P_{PO3}, abgeleitet von PO₃⁻, zur Peakintensität P_{CrPO4}, abgeleitet von CrPO₄⁻, im Bereich von 6 oder mehr und 120 oder weniger liegt,
wenn der korrosionsbeständige Film durch Röntgenphotoelektronenspektroskopie analysiert wird, ein Peak Poco, abgeleitet von C1s der O-C=O-Bindungen, im Bereich von 287 eV bis 290 eV und ein Peak Pc-c, abgeleitet von C1s der C-C-Bindungen, bei 285 eV detektiert werden, und
ein Wert des Peakhöhenverhältnisses P_{OCO/C-C}, erhalten durch Dividieren einer Höhe des Peaks P_{OCO} durch eine Höhe des Peaks P_{C-C}, im Bereich von 0,10 oder mehr und 0,50 oder weniger liegt.

16. Energiespeichervorrichtung, die ein Energiespeichervorrichtungselement umfasst, das mindestens eine positive Elektrode, eine negative Elektrode und einen Elektrolyten umfasst, wobei das Energiespeichervorrichtungselement in einer Verpackung untergebracht ist, die aus dem Energiespeichervorrichtungs-Verpackungsmaterial nach einem der Ansprüche 1 bis 14 gebildet ist.

## Revendications

1. Matériau d'emballage de dispositif de stockage de puissance comprenant :
un stratifié comprenant au moins une couche d'enrobage de surface, une couche de matériau de base, une couche d'agent adhésif noir, une couche barrière, une couche adhésive et une couche de résine thermoscellable dans cet ordre, dans lequel
la couche adhésive est un produit durci d'une composition de résine contenant un composé ayant un groupe isocyanate,
un film résistant à la corrosion est prévu sur au moins une surface de la couche barrière tournée vers la couche adhésive,
lorsque le film résistant à la corrosion est analysé en utilisant une spectrométrie de masse des ions secondaires par temps de vol, un rapport P_{PO3/CrPO4} de l'intensité de pic P_{PO3} dérivée de PO₃⁻ sur l'intensité de pic P_{CrPO4} dérivée de CrPO₄⁻ est dans la plage de 6 ou plus et 120 ou moins,
lorsque le film résistant à la corrosion est analysé par spectroscopie de photoélectrons aux rayons X, un pic Poco dérivé de C1s de liaisons O-C=O dans la plage de 287 eV à 290 eV et un pic Pc-c dérivé de C1s de liaisons C-C à 285 eV sont détectés, et
une valeur du rapport de hauteurs de pic P_{OCO/C-C} obtenue en divisant une hauteur du pic Poco par une hauteur du pic Pc-c est dans la plage de 0,10 ou plus et 0,50 ou moins.

2. Matériau d'emballage de dispositif de stockage de puissance comprenant :
un stratifié comprenant au moins une couche de matériau de base, une couche barrière, une couche adhésive et une couche de résine thermoscellable dans cet ordre, dans lequel
la couche de matériau de base inclut un film de polyester ou film de polyamide,
la couche adhésive est un produit durci d'une composition de résine contenant un composé ayant un groupe isocyanate,
un film résistant à la corrosion est prévu sur au moins une surface de la couche barrière tournée vers la couche adhésive,
lorsque le film résistant à la corrosion est analysé en utilisant une spectrométrie de masse des ions secondaires par temps de vol, un rapport P_{PO3/CrPO4} de l'intensité de pic P_{PO3} dérivée de PO₃⁻ sur l'intensité de pic P_{CrPO4} dérivée de CrPO₄⁻ est dans la plage de 6 ou plus et 120 ou moins,
lorsque le film résistant à la corrosion est analysé par spectroscopie de photoélectrons aux rayons X, un pic Poco dérivé de C1s de liaisons O-C=O dans la plage de 287 eV à 290 eV et un pic Pc-c dérivé de C1s de liaisons C-C à 285 eV sont détectés, et
une valeur du rapport de hauteurs de pic Pocoic-c obtenue en divisant une hauteur du pic Poco par une hauteur du pic Pc-c est dans la plage de 0,10 ou plus et 0,50 ou moins.

3. Matériau d'emballage de dispositif de stockage de puissance comprenant :
un stratifié comprenant au moins une couche de matériau de base, une couche formée d'un produit durci d'une composition de résine contenant un composé ayant un groupe isocyanate, une couche barrière, une couche adhésive et une couche de résine thermoscellable dans cet ordre, dans lequel
la couche adhésive est un produit durci d'une composition de résine contenant un composé ayant un groupe isocyanate,
un film résistant à la corrosion est prévu sur au moins une surface de la couche barrière tournée vers la couche adhésive,
lorsque le film résistant à la corrosion est analysé en utilisant une spectrométrie de masse des ions secondaires par temps de vol, un rapport P_{PO3/CrPO4} de l'intensité de pic P_{PO3} dérivée de PO₃⁻ sur l'intensité de pic P_{CrPO4} dérivée de CrPO₄⁻ est dans la plage de 6 ou plus et 120 ou moins,
lorsque le film résistant à la corrosion est analysé par spectroscopie de photoélectrons aux rayons X, un pic Poco dérivé de C1s de liaisons O-C=O dans la plage de 287 eV à 290 eV et un pic Pc-c dérivé de C1s de liaisons C-C à 285 eV sont détectés, et
une valeur du rapport de hauteurs de pic P_{OCO/C-C} obtenue en divisant une hauteur du pic Poco par une hauteur du pic Pc-c est dans la plage de 0,10 ou plus et 0,50 ou moins.

4. Matériau d'emballage de dispositif de stockage de puissance selon l'une quelconque des revendications 1 à 3, dans lequel lorsque le film résistant à la corrosion est analysé par spectroscopie de photoélectrons aux rayons X, un pic dérivé de Cr2p3/2 d'un composé de chrome est détecté dans la plage de 576 eV à 581 eV.

5. Matériau d'emballage de dispositif de stockage de puissance selon l'une quelconque des revendications 1 à 4, dans lequel lorsque le film résistant à la corrosion est analysé par spectroscopie de photoélectrons aux rayons X, un pic dérivé de P2p d'un composé d'acide phosphorique est détecté dans la plage de 132 eV à 135 eV.

6. Matériau d'emballage de dispositif de stockage de puissance selon l'une quelconque des revendications 1 à 5, dans lequel lorsque le film résistant à la corrosion est analysé par spectroscopie de photoélectrons aux rayons X, un pic dérivé de F1s d'un composé de fluor est détecté dans la plage de 685 eV à 689 eV.

7. Matériau d'emballage de dispositif de stockage de puissance selon l'une quelconque des revendications 1 à 6, dans lequel le film résistant à la corrosion est formé d'une composition contenant au moins une résine acrylique ayant un groupe COOH, un composé de chrome et un composé d'acide phosphorique.

8. Matériau d'emballage de dispositif de stockage de puissance selon la revendication 7, dans lequel la résine acrylique est au moins une sélectionnée parmi le groupe constitué de l'acide polyacrylique, d'un sel d'ammonium d'acide polyacrylique, d'un sel sodique d'acide polyacrylique et d'un sel d'amine d'acide polyacrylique.

9. Matériau d'emballage de dispositif de stockage de puissance selon la revendication 7, dans lequel la résine acrylique est au moins une sélectionnée parmi le groupe constitué d'un copolymère d'acide acrylique avec un acide dicarboxylique ou un anhydride dicarboxylique, d'un sel d'ammonium du copolymère, d'un sel sodique du copolymère et d'un sel d'amine du copolymère.

10. Matériau d'emballage de dispositif de stockage de puissance selon l'une quelconque des revendications 7 à 9, dans lequel le composé de chrome est au moins un du fluorure de chrome(III) et du nitrate de chrome(III).

11. Matériau d'emballage de dispositif de stockage de puissance selon l'une quelconque des revendications 1 à 10, dans lequel la résine contenue dans la composition de résine qui forme la couche adhésive est un squelette de polyoléfine.

12. Matériau d'emballage de dispositif de stockage de puissance selon l'une quelconque des revendications 1 à 11, dans lequel la couche adhésive contient une polyoléfine modifiée par un acide.

13. Matériau d'emballage de dispositif de stockage de puissance selon l'une quelconque des revendications 1 à 12, dans lequel lorsque la couche adhésive est analysée par spectroscopie infrarouge, un pic dérivé d'anhydride maléique est détecté.

14. Matériau d'emballage de dispositif de stockage de puissance selon la revendication 12, dans lequel la polyoléfine modifiée par un acide de la couche adhésive est un polypropylène modifié par un anhydride maléique, et
la couche de résine thermoscellable contient un polypropylène.

15. Procédé de production d'un matériau d'emballage de dispositif de stockage de puissance comprenant l'étape consistant à :
stratifier au moins une couche d'enrobage de surface, une couche de matériau de base, une couche d'agent adhésif noir, une couche barrière, une couche adhésive et une couche de résine thermoscellable dans cet ordre pour obtenir un stratifié, dans lequel
la couche adhésive est un produit durci d'une composition de résine contenant un composé ayant un groupe isocyanate,
un film résistant à la corrosion est prévu sur au moins une surface de la couche barrière tournée vers la couche adhésive,
lorsque le film résistant à la corrosion est analysé en utilisant une spectrométrie de masse des ions secondaires par temps de vol, un rapport P_{PO3/CrPO4} de l'intensité de pic P_{PO3} dérivée de PO₃⁻ sur l'intensité de pic P_{CrPO4} dérivée de CrPO₄⁻ est dans la plage de 6 ou plus et 120 ou moins,
lorsque le film résistant à la corrosion est analysé par spectroscopie de photoélectrons aux rayons X, un pic Poco dérivé de C1s de liaisons O-C=O dans la plage de 287 eV à 290 eV et un pic Pc-c dérivé de C1s de liaisons C-C à 285 eV sont détectés, et
une valeur du rapport de hauteurs de pic P_{OCO/C-C} obtenue en divisant une hauteur du pic Poco par une hauteur du pic Pc-c est dans la plage de 0,10 ou plus et 0,50 ou moins.

16. Dispositif de stockage de puissance comprenant un élément de dispositif de stockage de puissance comprenant au moins une électrode positive, une électrode négative et un électrolyte, dans lequel l'élément de dispositif de stockage de puissance est hébergé dans un emballage formé du matériau d'emballage de dispositif de stockage de puissance selon l'une quelconque des revendications 1 à 14.
